(19) Europäisches Patentamt
European Patent Office
Office européen des brevets

(11) EP 1 558 656 B1

(12) # EUROPÄISCHE PATENTSCHRIFT

(45) Veröffentlichungstag und Bekanntmachung des Hinweises auf die Patenterteilung:
**06.09.2006 Patentblatt 2006/36**

(21) Anmeldenummer: **04763159.3**

(22) Anmeldetag: **10.07.2004**

(51) Int Cl.:
***C08F 220/38*** *(2006.01)* ***C08F 212/34*** *(2006.01)*
***G02B 1/04*** *(2006.01)*

(86) Internationale Anmeldenummer:
**PCT/EP2004/007623**

(87) Internationale Veröffentlichungsnummer:
**WO 2005/033157 (14.04.2005 Gazette 2005/15)**

(54) **MISCHUNGEN ZUR HERSTELLUNG TRANSPARENTE KUNSTSTOFFE, TRANSPARENTE KUNSTSTOFFE SOWIE VERFAHREN ZU DEREN HERSTELLUNG UND VERWENDUNG**

MIXTURES FOR THE PRODUCTION OF TRANSPARENT PLASTIC MATERIALS, TRANSPARENT PLASTIC MATERIALS, AND METHOD FOR THE PRODUCTION AND USE THEREOF

MELANGES POUR PRODUIRE DES PLASTIQUES TRANSPARENTS, PLASTIQUES TRANSPARENTS, PROCEDE DE PRODUCTION ET UTILISATION DE CES PLASTIQUES

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.09.2003 DE 10342521**

(43) Veröffentlichungstag der Anmeldung:
**03.08.2005 Patentblatt 2005/31**

(73) Patentinhaber: **Röhm GmbH**
**64293 Darmstadt (DE)**

(72) Erfinder:
- **SCHMITT, Bardo**
  **55252 Mainz (DE)**
- **HARTMANN, Patrik**
  **64572 Büttelborn (DE)**

(56) Entgegenhaltungen:
**US-A- 5 214 116** **US-A- 5 384 379**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 558 656 B1

Printed by Jouve, 75001 PARIS (FR)

## Beschreibung

Die vorliegende Erfindung betrifft Mischungen zur Herstellung transparenter Kunststoffe. Des weiteren bezieht sich die vorliegende Erfindung auf transparente Kunststoffe, die aus den Mischungen hergestellt werden können, sowie Verfahren zu deren Herstellung. Weiterhin betrifft die vorliegende Erfindung die Verwendung von transparenten Kunststoffen zur Herstellung von optischen, vor allem ophthalmischen Linsen.

Brillen sind heutzutage aus dem Alltag nicht mehr wegzudenken. Dabei haben insbesondere Brillen mit Kunststoffgläsem in letzter Zeit an Bedeutung gewonnen, weil sie leichter und weniger zerbrechlich als Brillengläser aus anorganischen Materialien sind und mittels geeigneter Farbstoffe gefärbt werden können. Zur Herstellung von Kunststoff-Brillengläsem werden im allgemeinen hochtransparente Kunststoffe eingesetzt, die beispielsweise ausgehend von Diethylenglykol-bis(allylcarbonat) (DAC), Thiourethan-Verbindungen mit $\alpha,\omega$-terminierten Mehrfachbindungen oder schwefelhaltigen (Meth)acrylaten erhältlich sind.

DAC-Kunststoff weist eine sehr gute Schlagzähigkeit, Transparenz und eine gute Verarbeitbarkeit auf. Nachteilig ist jedoch, dass aufgrund des relativ geringen Brechungsindex $n_D$ von ca. 1,50 sowohl das Zentrum als auch die Ränder der betreffenden Kunststoffgläser verstärkt werden müssen, so dass die Brillengläser dementsprechend dick und schwer sind. Der Tragekomfort von Brillen mit DAC-Kunststoffgläsem ist daher deutlich gemindert.

Thiourethan-Prepolymere mit $\alpha,\omega$-terminierten Mehrfachbindungen, die durch Umsetzung von $\alpha,\omega$-difunktionellen Thiourethan-Prepolymeren, die zwei Isocyanatgruppen tragen, mit ungesättigten Verbindungen, die zerewitinowaktive H-Atome besitzen, erhalten werden, werden beispielsweise in DD 298645 beschrieben. Als Anwendungsmöglichkeiten der Thiourethan-Prepolymere werden transparente Schichten oder gut haftende Filme genannt. Eine Verwendung als optische und ophthalmische Linsen wird in DD 298645 nicht offenbart.

Die in JP 5-215995 beschriebenen Kunststoff-Brillengläser werden durch radikalische Copolymerisation einer temären Zusammensetzung aus einer $\alpha,\omega$-Di(meth)acrylat-terminierten Thiourethan-Verbindung, die S-(Phenyl-S)$_2$ -Einheiten aufweist, Trimethylolpropantris(beta-thiopropionat) und Divinylbenzol erhalten. Obwohl der Brechungsindex der resultierenden Kunststoffe relativ groß ist ($n_D \geq 1{,}58$), haben die Gläser den Nachteil einer vergleichsweise niedrigen Abbeschen-Zahl im Bereich von 28 bis 36. Eine zu niedrige Abbesche-Zahl führt zu einer höheren Dispersion und zu Farbrändem, entsprechende Kunststoff-Gläser sind daher als Sehhilfe nur bedingt geeignet. Über die Schlagzähigkeit der Kunststoffgläser sowie über ihre Vicat-Temperatur wird in JP 5-215995 nichts ausgesagt.

Entsprechendes gilt auch für die in der Druckschrift WO 01/36506 offenbarten Kunststoffe, die durch radikalisch Polymerisation von Monomeren mit mindestens zwei (Meth)acryloylgruppen erhalten werden, wobei die Monomere weiterhin Thiourethan- und/oder Dithiourethanverknüpfungen innerhalb des Moleküls aufweisen. Das exemplarisch angeführte Polymer weist einen Brechungsindex von 1,60 und eine Abbe-Zahl von 34 bis 35 auf. Angaben zur Vicat-Temperatur der Kunststoffe können auch dieser Druckschrift nicht entnommen werden.

Eine weitere Gruppe von transparenten Kunststoffen für optische Anwendungen wird in EP 0810210 offenbart. Dabei leiten sich die eingesetzten Schwefelenthaltenden (Meth)acrylat-Monomere im Gegensatz zu den vorstehend beschriebenen Verbindungen formal nicht von den Hydroxyalkyl(meth)acrylaten, sondern von den Mercaptoalkyl(meth) acrylaten ab. Die in EP 0810210 beschriebenen Kunststoffe weisen eine verbesserte Schlagzähigkeit und einen hohen Brechungsindex $n_D$ im Bereich von 1,589 bis 1,637 auf. Die Abbesche-Zahl ist im Vergleich mit den in JP 5-215995 beschriebenen Kunststoffen nur leicht erhöht, sie liegt zwischen 27,5 und 40,7. Daher sind auch die in EP 0810210 offenbarten Kunststoffe für Brillengläser nur bedingt geeignet. Angaben zur Vicat-Temperatur der Kunststoffe können auch dieser Druckschrift nicht entnommen werden.

Die Druckschrift DE 4234251 offenbart schwefelhaltige Polymethacrylate, welche durch radikalische Copolymerisation einer Monomermischung aus Verbindungen der Formel (1) und (2) erhalten werden.

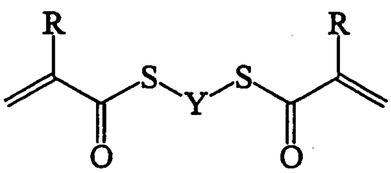

(1)

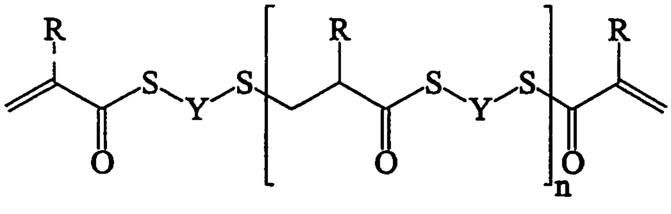

(2)

Dabei bezeichnet Y für einen gegebenenfalls verzweigten, gegebenenfalls cyclischen Alkylrest mit 2 bis 12 Kohlenstoffatomen oder einem Arylrest mit 6 bis 14 Kohlenstoffatomen oder einen Alkarylrest mit 7 bis 20 Kohlenstoffatomen, wobei die Kohlenstoffketten durch eine oder mehrere Ether- oder Thioethergruppen unterbrochen sein können. R steht für Wasserstoff oder Methyl und n ist eine ganze Zahl im Bereich von 1 bis 6.

Gemäß DE 4234251 stehen die Monomere der Formel (1) und (2) im allgemeinen im molaren Verhältnis von 1:0,5 bis 0,5:1. Die Herstellung der Monomermischung erfolgt durch Umsetzung von mindestens zwei Molen (Meth)acrylsäurechlorid oder (Meth)acrylsäureanhydrid mit einem Mol eines Dithiols, wobei man das (Meth)acrylsäurechlorid oder (Meth)acrylsäureanhydrid in einem inerten, organischen Lösungsmittel und das Dithiol in wässrig-alkalischer Lösung zur Reaktion bringt. Als geeignete Lösungsmittel werden Methyl-tert.butylether, Toluol und Xylol genannt, deren Dielektrizitätskonstante bei 20°C 2,6, 2,4 bzw. 2,3 bis 2,6 ist.

Die in DE 4234251 beschriebenen Kunststoffe sind farblos, hart und leicht spröde und weisen einen hohen Brechungsindex $n_D$ im Bereich von 1,602 bis 1,608 auf. Die Abbesche-Zahl liegt zwischen 35 und 38. Daher sind auch diese Kunststoffe für Brillengläser nur bedingt geeignet. Angaben zur Vicat-Temperatur der Kunststoffe können auch dieser Druckschrift nicht entnommen werden.

In der Druckschrift WO 031011925 wird die Polymerisation von Thiomethacrylaten mit Polyethylenglykolderivaten beschrieben. Die daraus hergestellten Kunststoffe können u. a. für die Herstellung optischer Linsen eingesetzt werden. Nachteilig an diesen Linsen sind deren mechanischen Eigenschaften. So genügt insbesondere die Schlagzähigkeit vielen Anforderungen nicht.

In Anbetracht des Standes der Technik war es nun Aufgabe der vorliegenden Erfindung, Mischungen für die Herstellung von transparenten Kunststoffen, die als Material für optische Linsen geeignet sind, zur Verfügung zu stellen, wobei die Kunststoffe möglichst gute mechanischen Eigenschaften, insbesondere eine hohe Schlagzähigkeit aufweisen und gleichzeitig einen hohen Brechungsindex, vorzugsweise größer 1,58, und eine möglichst hohe Abbeschen-Zahl, vorzugsweise größer 36 zeigen. Insbesondere sollten Kunststoff-Brillengläser herstellbar sein, die eine niedrige Dispersion und keine Farbränder aufweisen.

Der vorliegenden Erfindung lag auch die Aufgabe zugrunde, eine Eduktzusammensetzung für die Herstellung eines hochtransparenten Kunststoffes mit verbesserten mechanischen Eigenschaften auch bei Temperaturen oberhalb der Raumtemperatur zugänglich zu machen. Insbesondere sollte der erfindungsgemäße Kunststoff eine möglichst hohe Vicat-Temperatur, vorzugsweise größer 50,0°C gemessen nach ISO 306, aufweisen.

Eine Aufgabe der vorliegenden Erfindung war mithin einen hochtransparenten Kunststoff anzugeben,-der ausgehend von der Eduktzusammensetzung auf einfache Art und Weise, im industriellen Maßstab und kostengünstig herstellbar ist. Insbesondere sollte er ausgehend von einer bei Normaldruck und Temperaturen im Bereich von 20,0°C bis 80,0°C fließfähigen Mischung via freie radikalische Polymerisation erhältlich sein.

Der vorliegenden Erfindung lag auch die Aufgabe zugrunde, Anwendungsgebiete und Verwendungsmöglichkeiten des erfindungsgemäßen hochtransparenten Kunststoffes anzugeben.

Gelöst werden diese sowie weitere nicht explizit genannte Aufgaben, die jedoch aus den hierin einleitend diskutierten Zusammenhängen ohne weiteres ableitbar oder erschließbar sind, durch eine Mischung mit allen Merkmalen des Patentanspruchs 1. Zweckmäßige Abwandlungen der erfindungsgemäßen Mischung werden in den auf Anspruch 1 rückbezogenen Unteransprüchen unter Schutz gestellt. Daneben werden die aus den erfindungsgemäßen Mischungen erhältlichen hochtransparenten Kunststoffe sowie Verfahren zu ihrer Herstellung beansprucht. Der Anspruch der Verwendungskategorie schützt eine bevorzugte Verwendung vom erfindungsgemäßen hochtransparenten Kunststoff. Eine optische, vorzugsweise ophthalmische Linse, die den erfindungsgemäßen hochtransparenten Kunststoff aufweist, wird in einem weiteren Produktanspruch beschrieben.

Dadurch, dass ein Monomer (A) in einer Mischung zur Herstellung transparenter Kunststoffe mindestens zwei olefinische Gruppen umfasst, die in $\alpha$- und/oder $\beta$-Stellung zur olefinischen Gruppe in Art und/oder Anzahl unterschiedliche Atome aufweisen, gelingt es auf nicht ohne weiteres vorhersehbare Weise,
Mischungen, umfassend

a) Verbindungen der Formel (I) und (II)

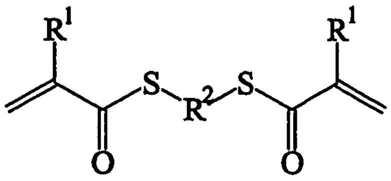

(I)

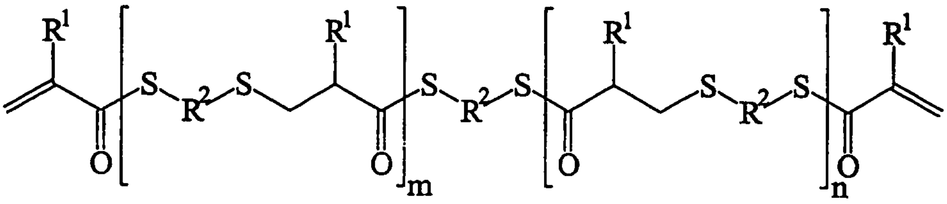

(II)

worin $R^1$ jeweils unabhängig voneinander Wasserstoff oder einen M ethyl rest,
$R^2$ jeweils unabhängig voneinander einen linearen oder verzweigten, aliphatischen oder cycloaliphatischen Rest oder einen substituierten oder unsubstituierten aromatischen oder heteroaromatischen Rest und m und n jeweils unabhängig voneinander eine ganze Zahl größer gleich 0 mit m + n > 0 bedeuten, und

b) mindestens ein radikalisch polymerisierbares Monomer (A) mit einem Molekulargewicht von mindestens 150 g/mol, das mindestens zwei endständige olefinische Gruppen enthält, zur Verfügung zu stellen,

die zur Herstellung von transparenten Kunststoffen geeignet sind, die hervorragende mechanische und optische Eigenschaften aufweisen. Der erfindungsgemäße transparente Kunststoff weist eine bisher unbekannte Kombination herausragender Eigenschaften, wie einen hohen Brechungsindex, eine hohe Abbesche-Zahl, eine gute Schlagzähigkeit sowie eine hohe Vicat-Temperatur auf. Die entsprechenden Kunststoff-Brillengläser zeigen eine niedrige Dispersion; Farbränder sind nicht zu beobachten.

Zugleich besitzt der erfindungsgemäße transparente Kunststoff weitere Vorteile. Hierzu gehören unter anderem:

⇒ Aufgrund des hohen Brechungsindex vom erfindungsgemäßen Kunststoff ist eine Verstärkung und somit Verdickung des Zentrums und der Ränder von entsprechenden Kunststoff-Brillengläsern nicht erfordedich, der Tragekomfort derartiger Brillen ist wegen des vergleichsweise geringen Gewichts deutlich erhöht.

⇒ Die sehr gute Schlagzähigkeit des erfindungsgemäßen Kunststoffes schützt die entsprechenden Kunststoff-Brillengläser vor den "Gefahren des Alltags". Eine Beschädigung bzw. irreparable Zerstörung, insbesondere der dünnen Brillengläser durch mechanische Gewalteinwirkung wird größtenteils verhindert.

⇒ Der erfindungsgemäße hochtransparente Kunststoff weist eine hohe Vicat-Temperatur gemäß ISO 306, vorzugsweise größer 50,0°C, auf und behält daher bis zu dieser Temperatur seine hervorragenden mechanischen Eigenschaften, insbesondere die hohe Schlagfestigkeit und seine Härte.

=> Der erfindungsgemäße hochtransparente Kunststoff ist durch freie radikalische Copolymerisation einer bei Normaldruck und Temperaturen im Bereich von 20,0°C bis 80,0°C vorzugsweise fließfähigen Monomermischung auf einfache Art und Weise, im industriellen Maßstab und kostengünstig herstellbar.

⇒ Die Herstellung der zugrundeliegenden Monomermischung ist ebenfalls auf einfache Art und Weise, im industriellen Maßstab und kostengünstig möglich.

Die Mischungen der vorliegenden Erfindung umfassen Verbindungen der Formel (I) und (II)

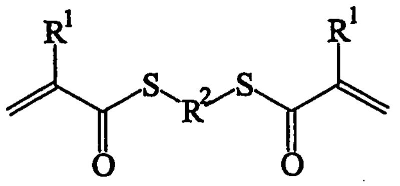

(I)

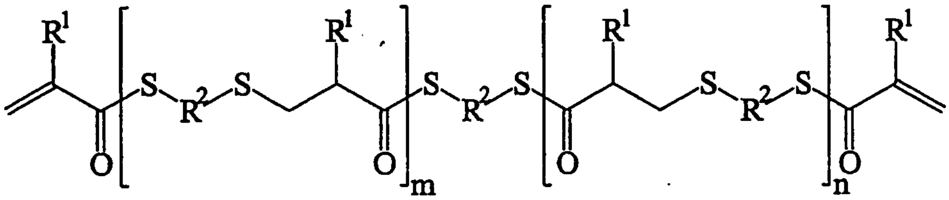

(II),

worin der Rest $R^1$ jeweils unabhängig voneinander Wasserstoff oder ein Methylrest, vorzugsweise ein Methylrest und der Rest $R^2$ jeweils unabhängig voneinander einen linearen oder verzweigten, aliphatischen oder cycloaliphatischen Rest oder einen substituierten oder unsubstituierten aromatischen oder heteroaromatischen Rest bezeichnet, wobei der Rest $R^2$ vorzugsweise 1 bis 100, insbesondere 1 bis 20 Kohlenstoffatome umfassen kann.

Zu den bevorzugten linearen oder verzweigten, aliphatischen oder cycloaliphatischen Resten gehören beispielsweise die Methylen-, Ethylen-, Propylen-, iso-Propylen-, n-Butylen-, iso-Butylen-, t-Butylen- oder Cyclohexylen-Gruppe.

Zu den bevorzugten zweibindigen aromatischen oder heteroaromatischen Resten gehören insbesondere Gruppen, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste.

Weiterhin umfasst der Rest $R^2$ auch Reste der Formel

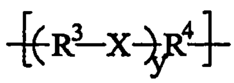,

(Ia),

wobei $R^3$ jeweils unabhängig voneinander ein linearer oder verzweigter, aliphatischer oder cycloaliphatischer Rest, wie beispielsweise eine Methylen-, Ethylen-, Propylen-, iso-Propylen-, n-Butylen-, iso-Butylen-, t-Butylen- oder Cyclohexylen-Gruppe ist. Der Rest X ist jeweils unabhängig voneinander Sauerstoff oder Schwefel und der Rest $R^4$ steht für einen linearen oder verzweigten, aliphatischen oder cycloaliphatischen Rest, wie beispielsweise eine Methylen-, Ethylen-, Propylen-, iso-Propylen-, n-Butylen-, iso-Butylen-, t-Butylen- oder Cyclohexylen-Gruppe. Dabei umfassen im Rahmen der vorliegenden Erfindung cycloaliphatische Reste auch bi-, tri- und polycyclische aliphatische Reste. y ist eine ganze Zahl zwischen 1 und 10, insbesondere 1, 2, 3 und 4.

Bevorzugte Reste der Formel (Ia) umfassen:

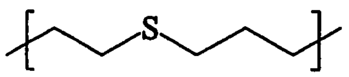,

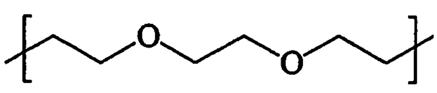,

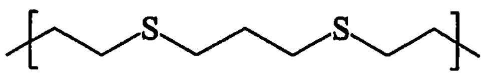

und

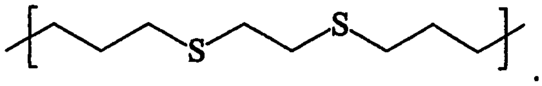

Vorzugsweise ist der Rest $R^2$ ein aliphatischer Rest mit 1 bis 10 Kohlenstoffatomen, vorzugsweise ein linearer aliphatischer Rest mit 2 bis 8 Kohlenstoffatomen.

Die Indizes m und n sind jeweils unabhängig voneinander eine ganze Zahl größer gleich 0, beispielsweise 0, 1, 2, 3, 4, 5 oder.6. Dabei ist die Summe m + n größer 0, vorzugsweise im Bereich von 1 bis 6, zweckmäßigerweise im Bereich von 1 bis 4, insbesondere 1, 2 oder 3.

Die Verbindungen der Formel (I) sowie die Verbindungen der Formel (11) können jeweils einzeln oder auch als Mischung mehrerer Verbindungen der Formel (I) bzw. (II) eingesetzt werden.

Die relativen Anteile der Verbindungen der Formel (I) und (II) in der erfindungsgemäßen Monomermischung sind prinzipiell beliebig, sie können dazu genutzt werden, das Eigenschaftsprofil des erfindungsgemäßen Kunststoffes gemäß den Bedürfnissen der Anwendung "maßzuschneidern". Beispielsweise kann es äußerst zweckmäßig sein, dass die Monomermischung einen deutlichen Überschuss an Verbindung(en) der Formel (I) oder Verbindung(en) der Formel (II), jeweils bezogen auf die Gesamtmenge an Verbindungen der Formel (I) und (II), enthält.

Für die Zwecke der vorliegenden Erfindung ist es jedoch besonders günstig, dass die Mischung mehr als 10 mol-%, vorzugsweise mehr als 12 mol-%, insbesondere mehr als 14 mol-%, bezogen auf die Gesamtmenge der Verbindungen der Formel (I) und (II), Verbindungen der Formel (II) mit m+n=2 enthält.

Weiterhin ist es erfindungsgemäß besonders günstig, Mischungen einzusetzen, die mehr als 5,8 mol-%, zweckmäßigerweise mehr als 6,5 mol-%, insbesondere mehr als 7,5 mol-%, bezogen auf die Gesamtmenge der Verbindungen der Formel (I) und (II), Verbindungen der Formel (II) mit m+n=3 enthalten. Der Anteil der Verbindungen (I) beträgt vorzugsweise 0,1 bis 50,0 mol-%, zweckmäßigerweise 10,0 bis 45,0 mol-%, insbesondere 20,0 bis 35,0 mol-%, bezogen auf die Gesamtmenge der Verbindungen der Formel (I) und (II). Der Anteil der Verbindungen (II) mit m+n=1 ist vorzugsweise größer 30,0 mol-%, zweckmäßigerweise größer 35,0 mol-%, insbesondere größer 40 mol-%, bezogen auf die Gesamtmenge der Verbindungen der Formel (I) und (II). Der Anteil der Verbindungen (II) mit m+n>3 ist vorzugsweise größer 0 mol-%, zweckmäßigerweise größer 1 mol-%, insbesondere größer 2 mol-%, bezogen auf die Gesamtmenge der Verbindungen der Formel (I) und (II).

Verfahren zur Herstellung der Verbindungen der Formel (I) und (II) sind dem Fachmann beispielsweise aus DE 4234251 bekannt, auf deren Offenbarung hiermit explizit Bezug genommen wird. Dennoch hat es sich im Rahmen der vorliegenden Erfindung als ganz besonders günstig erwiesen, eine Mischung der Verbindungen der Formel (I) und (II) durch ein Verfahren herzustellen, bei welchem man 1,0 bis < 2,0 mol, vorzugsweise 1,1 bis 1,8 mol, zweckmäßigerweise 1,2 bis 1,6 mol, insbesondere 1,2 bis 1,5 mol, mindestens einer Verbindung der Formel (III)

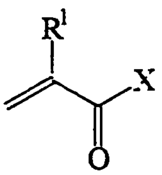

**(III)**

mit einem mol mindestens eines Polythiols der Formel (IV) umsetzt

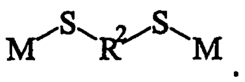

**(IV)**

Der Rest X steht für Halogen, insbesondere Chlor oder Brom, oder für einen Rest

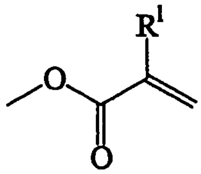

,

d. h. die Verbindungen der Formel (III) umfassen unter anderem Acrylsäurechlorid, Methacrylsäurechlorid, Acrylsäureanhydrid und Methacrylsäureanhydrid, wobei der Einsatz von Acrylsäureanhydrid, Methacrylsäureanhydrid oder Mischungen der beiden besonders bevorzugt ist.

M kennzeichnet jeweils unabhängig voneinander Wasserstoff oder ein Metallkation. Bevorzugte Metallkationen leiten sich von Elementen mit einer Elektronegativität kleiner 2,0, zweckmäßigerweise kleiner 1,5, ab, wobei Alkalimetallkationen, insbesondere $Na^+$, $K^+$, $Rb^+$, $Cs^+$, und Erdalkalimetallkationen, insbesondere $Mg^{2+}$, $Ca^{2+}$, $Sr^{2+}$, $Ba^{2+}$, besonders bevorzugt sind. Ganz besonders günstige Ergebnisse können mit den Metallkationen $Na^+$ und $K^+$ erzielt werden.

In diesem Zusammenhang besonders geeignete Polythiole der Formel (IV) umfassen 1,2-Ethandithiol, 1,2-Propandithiol, 1,3-Propandithiol, 1,2-Butandithiol, 1,3-Butandithiol, 1,4-Butandithiol, 2-Methylpropan-1,2-dithiol, 2-Methylpropan-1,3-dithiol, 3,6-Dioxa-1,8-octandithiol, Ethylcyclohexyldimercaptane, die durch Umsetzung von 4-Ethenylcyclohexen mit Schwefelwasserstoff erhältlich sind, ortho-Bis(mercaptomethyl)benzol, meta-Bis(mercaptomethyl)benzol, para-Bis(mercaptomethyl)benzol, Verbindungen der Formel

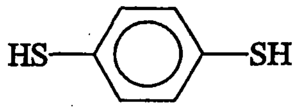

,

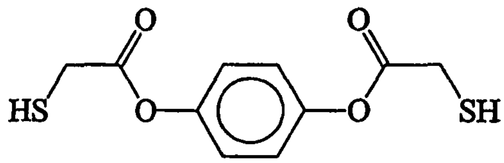

,

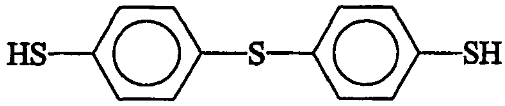

,

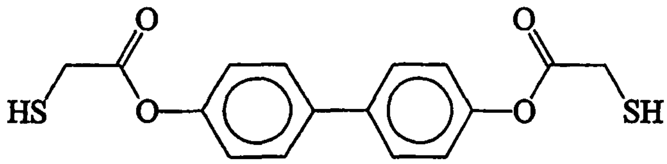

,

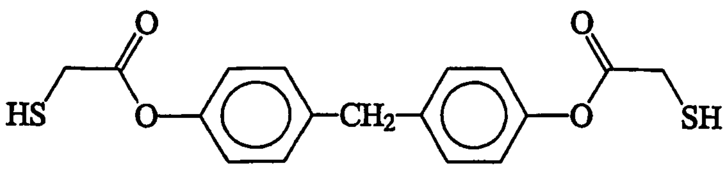

,

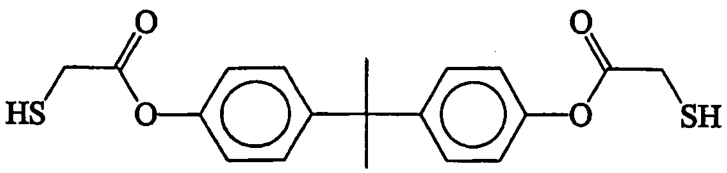

sowie Verbindungen der Formel

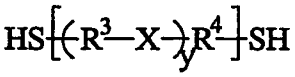 ,

(IVa)

wobei $R^3$ jeweils unabhängig voneinander ein linearer oder verzweigter, aliphatischer oder cycloaliphatischer Rest, wie beispielsweise eine Methylen-, Ethylen-, Propylen-, iso-Propylen-, n-Butylen-, iso-Butylen-, t-Butylen- oder Cyclohexylen-Gruppe ist. Dabei umfassen im Sinne der vorliegenden Erfindung cycloaliphatische Reste auch bi-, tri- und polycyclische aliphatische Reste. Der Rest X ist jeweils unabhängig voneinander Sauerstoff oder Schwefel und der Rest $R^4$ steht für einen linearen oder verzweigten, aliphatischen oder cycloaliphatischen Rest, wie beispielsweise eine Methylen-, Ethylen-, Propylen-, iso-Propylen-, n-Butylen-, iso-Butylen-, t-Butylen- oder Cyclohexylen-Gruppe. Dabei umfassen im Rahmen der vorliegenden Erfindung cycloaliphatische Reste auch bi-, tri- und polycyclische aliphatische Reste. y ist eine ganze Zahl zwischen 1 und 10, insbesondere 1, 2, 3 und 4.

Bevorzugte Verbindungen der Formel (IVa) umfassen:

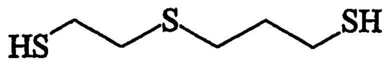 ,

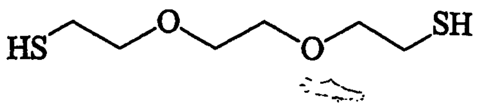 ,

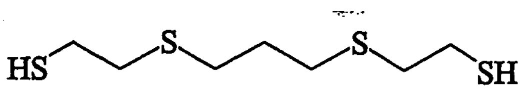

und

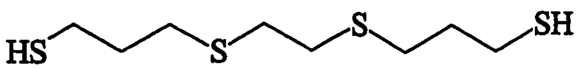 .

Im Rahmen einer ganz besonders bevorzugten Ausführungsform dieses Verfahrens wird 1,2-Ethandithiol als Verbindung der Formel (IV) eingesetzt.

Gemäß diesem Verfahren werden die Verbindung(en) der Formel (III) in mindestens einem inerten, organischen Lösungsmittel L und die Verbindung(en) der Formel (IV) in wässrig-alkalischer Lösung zur Reaktion gebracht, wobei der Begriff "inertes, organisches Lösungsmittel" für solche organischen Lösungsmittel steht, die unter den jeweiligen Reaktionsbedingungen nicht mit den im Reaktionssystem vorliegenden Verbindungen reagieren.

Vorzugsweise weist mindestens ein Lösungsmittel L eine relative Dielektrizitätskonstante > 2,6, vorzugsweise > 3,0, zweckmäßigerweise > 4,0, insbesondere > 5,0, jeweils gemessen bei 20°C, auf. In diesem Zusammenhang bezeichnet die relative Dielektrizitätskonstante eine dimensionslose Zahl, die angibt, auf das Wievielfache sich die

Kapazität C eines (theoretisch) im Vakuum befindlichen Kondensators erhöht, wenn man zwischen die Platten Stoffe mit dielektrischen Eigenschaften, sogenannte Dielektrika bringt. Dieser Wert wird bei 20°C gemessen und auf niedrige Frequenzen ($\omega \rightarrow 0$) extrapoliert. Für weitere Details wird auf die gängige Fachliteratur, insbesondere auf Ullmann Encyklopädie der technischen Chemie, Band 2/1 Anwendung physikalischer und physikalisch-chemischer Methoden im Laboratorium, Stichwort:Dielektrizitätskonstante, S. 455 - 479 verwiesen. Dielektrizitätswerte von Lösungsmittel sind u. a. im Handbook of Chemistry and Physics, 71. Auflage, CRC Press, Baco Raton, Ann Arbor, Boston, 1990-1991, S. 8-44, 8-46 und 9-9 bis 9-12 angegeben.

Im Rahmen dieses Verfahrens ist es weiterhin besonders vorteilhaft, wenn das Lösungsmittel und die wässrige Lösung während der Umsetzung zwei Phasen ausbilden und nicht homogen mischbar sind. Zu diesem Zweck weist das Lösungsmittel vorzugsweise eine Wasserlöslichkeit, gemessen bei 20°C, kleiner 10 g Wasser bezogen auf 100 g Lösungsmittel auf.

Erfindungsgemäß bevorzugte Lösungsmittel L umfassen

aliphatische Ether, wie Diethylether (4,335), Dipropylether, Diisopropylether; cycloaliphatische Ether, wie Tetrahydrofuran (7,6);

aliphatische Ester, wie Methylformiat (8,5), Ethylformiat, Propylformiat, Methylacetat, Essigester, n-Butylacetat (5,01), Methylpropionat, Methylbutyrat (5,6), Ethylbutyrat, 2-Methoxyethylacetat;

aromatische Ester, wie Benzylacetat, Dimethylphthalat, Methylbenzoat (6,59), Ethylbenzoat (6,02), Methylsalicylat, Ethylsalicylat, Phenylacetat (5,23);

aliphatische Ketone, wie Aceton, Methylethylketon (18,5), Pentanon-2 (15,4), Pentanon-3 (17,0), Methylisoamylketon, Methylisobutylketon (13,1);

aromatische Ketone, wie Acetophenon;

Nitroaromaten, wie Nitrobenzol, o-Nitrotoluol (27,4), m-Nitrotoluol (23), p-Nitrotoluol;

halogenierte Aromaten, wie Chlorbenzol (5,708), o-Chlorotoluol (4,45), m-Chlorotoluol (5,55), p-Chlorotoluol (6,08), o-Dichlorobenzol, m-Dichlorobenzol;

Heteroaromaten, wie Pyridin, 2-Methylpyridin (9,8), Chinolin, Isochinolin;

oder Mischungen dieser Verbindungen, wobei die Angaben die Klammem die jeweiligen, zugehörigen, relativen Dielektrizitätskonstanten bei 20°C sind.

Dabei sind für die Zwecke des vorliegenden Verfahrens aliphatische Ester und cycloaliphatische Ether, insbesondere Ethylacetat und Tetrahydrofuran ganz besonders geeignet.

Im Rahmen des vorliegenden Verfahrens kann das Lösungsmittel L sowohl allein als auch eine Lösungsmittelmischung eingesetzt werden, wobei nicht alle im Gemisch enthaltenen Lösungsmittel das vorstehende Dielektrizitätskriterium erfüllen müssen. Beispielsweise können auch Tetrahydrofuran/Cyclohexan-Mischungen erfindungsgemäß eingesetzt werden. Jedoch hat es sich als zweckmäßig erwiesen, dass das Lösungsmittelgemisch eine relative Dielektrizitätskonstante > 2,6, vorzugsweise > 3,0, zweckmäßigerweise > 4,0, insbesondere > 5,0, jeweils gemessen bei 20°C, aufweist. Besonders vorteilhafte Ergebnisse können mit Lösungsmittelmischungen erzielt werden, welche nur Lösungsmittel mit einer relativen Dielektrizitätskonstante > 2,6, vorzugsweise > 3,0, zweckmäßigerweise > 4,0, insbesondere > 5,0, jeweils gemessen bei 20°C, enthalten.

Die wässrig-alkalische Lösung der Verbindung(en) der Formel (IV) enthält vorzugsweise 1,1 bis 1,5 val (Äquivalente) mindestens einer Bronsted-Base, bezogen auf die Gesamtmenge an Verbindung(en) der Formel (III). Bevorzugte Bronsted-Basen im Sinne der vorliegenden Erfindung umfassen Alkalihydroxide und Erdalkalihydroxide, insbesondere Natriumhydroxid und Kaliumhydroxid.

Die Durchführung der Umsetzung kann in prinzipiell in jeder erdenklichen Weise erfolgen, Beispielsweise ist es möglich, die Verbindung(en) der Formel (III) im Lösungsmittel(gemisch) L vorzulegen und die wässrig-alkalische Lösung der Verbindung(en) der Formel (IV) schrittweise oder kontinuierlich zuzugeben. Dennoch hat es sich im Rahmen des vorliegenden Verfahrens als ganz besonders günstig erwiesen, die Verbindung(en) der Formel (III) in mindestens einem inerten, organischen Lösungsmittel L und die Verbindung(en) der Formel (IV) in wässrig-alkalischer Lösung parallel dem Reaktionsgefäss zuzudosieren.

Die Reaktionstemperatur kann man über einen weiten Bereich variieren, aber häufig liegt die Temperatur im Bereich von 20,0 °C bis 120,0 °C, vorzugsweise im Bereich von 20,0 °C bis 80,0 °C. Ähnliches gilt für den Druck bei

der die Umsetzung vollzogen wird. So kann die Reaktion sowohl bei Unterdruck als auch bei Überdruck stattfinden. Vorzugsweise wird sie aber bei Normaldruck durchgeführt. Obwohl die Reaktion auch unter Luft stattfinden kann, hat es sich im Rahmen des vorliegenden Verfahrens als ganz besonders günstig erwiesen die Umsetzung unter Schutzgasatmosphäre, vorzugsweise Stickstoff und/oder Argon, durchzuführen, wobei vorzugsweise ein geringer Sauerstoffanteil vorhanden ist.

Günstigerweise wird das Reaktionsgemisch in einem weiteren Schritt mit einer Bronsted-Säure umgesetzt, vorzugsweise bis die wässrige Lösung bei 20°C einen pH-Wert kleiner 7,0, zweckmäßigerweise kleiner 6,0, insbesondere kleiner 5,0, aufweist. Einsetzbare Säuren umfassen in diesem Zusammenhang anorganische Mineralsäuren, wie Salzsäure, Schwefelsäure, Phosphorsäure, organische Säuren, wie Essigsäure, Propionsäure, und saure Ionenaustauscher, insbesondere saure Kunstharzionenaustauscher, wie beispielsweise ® Dowex M-31 (H). Dabei hat sich der Einsatz von sauren Kunstharzionenaustauschem mit Beladungen von mindestens 1,0 meq, vorzugsweise mindestens 2,0 meq, insbesondere mindestens 4,0 meq, $H^{+}$-Ionen bezogen auf 1 g getrockneten Ionenaustauscher, Komgrößen von 10-50 mesh und Porositäten im Bereich von 10 bis 50 % bezogen auf das Gesamtvolumen des Ionenaustauschers ganz besonders bewährt.

Zur Isolierung der Verbindungen der Formel (I) und (II) wird zweckmäßigerweise die aus dem Lösungsmittel L bestehende organische Phase abgetrennt, gegebenenfalls gewaschen, getrocknet und das Lösungsmittel verdampft.

Bei der Umsetzung der Verbindung(en) der Formel (III) mit der bzw. den Verbindung(en) der Formel (IV) können Inhibitoren zugesetzt werden, die eine radikalische Polymerisation der (Meth)acrylgruppen während der Reaktion verhindem. Diese Inhibitoren sind in der Fachwelt weithin bekannt.

Eingesetzt werden hauptsächlich 1,4-Dihydroxybenzole. Es können jedoch auch anders substituierte Dihydroxybenzole zum Einsatz kommen. Allgemein lassen sich derartige Inhibitoren mit der allgemeinen Formel (V) wiedergeben

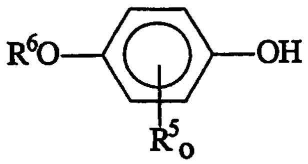

(V),

worin

$R^5$ einen linearen oder verzweigten Alkylrest mit eins bis acht Kohlenstoffatomen, Halogen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, Cl, F oder Br;

o eine ganze Zahl im Bereich von eins bis vier, vorzugsweise eins oder zwei ist; und

$R^6$ Wasserstoff, einen linearen oder verzweigten Alkylrest mit eins bis acht Kohlenstoffatomen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl oder tert.-Butyl.

Es können jedoch auch Verbindungen mit 1,4-Benzochinon als Stammverbindung eingesetzt werden. Diese lassen sich mit der Formel (VI) beschreiben

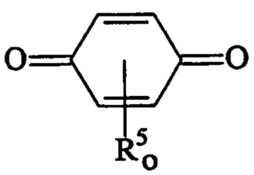

(VI)

worin

$R^5$ einen linearen oder verzweigten Alkylrest mit eins bis acht Kohlenstoffatomen, Halogen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, Cl, F oder Br; und

o eine ganze Zahl im Bereich von eins bis vier, vorzugsweise eins oder zwei ist.

Ebenso werden Phenole der allgemeinen Struktur (VII) eingesetzt

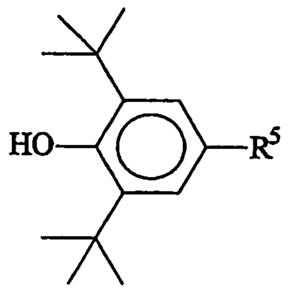

(VII)

worin

$R^5$ einen linearen oder verzweigten Alkylrest mit eins bis acht Kohlenstoffatomen, Aryl oder Aralkyl, Propionsäureester mit 1 bis 4 wertigen Alkoholen, welche auch Heteroatome wie S, O und N enthalten können, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl bedeutet.

Eine weitere vorteilhafte Substanzklasse stellen gehinderte Phenole auf Basis von Triazinderivaten der Formel (VIII) dar

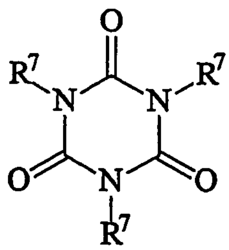

(VIII)

mit $R^7$ = Verbindung der Formel (IX)

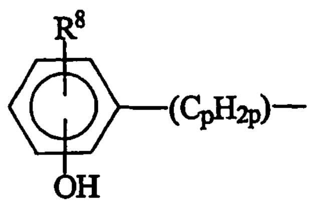

(IX)

worin

$R^8 = C_pH_{2p+1}$

mit p = 1 oder 2 ist.

Besonders erfolgreich werden die Verbindungen 1,4-Dihydroxybenzol, 4-Methoxyphenol, 2,5-Dichloro-3,6-dihydroxy-1,4-benzochinon, 1,3,5-Trimethyl-2,4,6-tris-(3,5-di-tert.butyl-4-hydroxybenzyl)benzol, 2,6-Di-tert. butyl-4-methylphenol, 2,4-Dimethyl-6-tert. butylphenol, 2,2-Bis [3,5-Bis(1,1-dimethylethyl)-4-hydroxyphenyl-1-oxopropoxymethyl)] 1,3-propandiylester, 2,2'-Thiodiethylbis-[3-(3,5-di-tert.butyl-4-hydroxyphenyl)]propionat, Octadecyl-3-(3,5-di-tert.butyl-4-hydroxyphenyl)propionat, 3,5-Bis(1,1-dimethylethyl-2,2-Methylenbis-(4-methyl-6-tert.butyl)phenol, Tris-(4-tert.butyl-3-hydroxy-2,6-dimethylbenzyl)-s-triazin-2,4,6-(1 H,3H,5H)trion, Tris (3,5-ditert.butyl-4-hydroxy)-s-triazin-2,46-(1 H, 3H, 5H) trion oder tert Butyl-3,5-dihydroxybenzol eingesetzt.

Bezogen auf das Gewicht der gesamten Reaktionsmischung beträgt der Anteil der Inhibitoren einzeln oder als Mischung im allgemeinen 0,01 - 0,50 % (wt/wt), wobei man die Konzentration der Inhibitoren vorzugsweise so auswählt, dass die Farbzahl gemäß DIN 55945 nicht beeinträchtigt wird. Viele dieser Inhibitoren sind kommerziell erhältlich.

Im Rahmen der vorliegenden Erfindung enthält die Mischung neben den Verbindungen der Formel (I) und (II) weiterhin mindestens ein radikalisch polymerisierbares Monomer (A) mit mindestens zwei endständigen olefinischen Gruppen. Endständig bedeutet, dass mindestens drei der vier mit den zwei Kohlenstoffatomen der Doppelbindung verknüpften Reste maximal 1 Kohlenstoffatom aufweisen. Vorzugsweise weist die olefinische Gruppe mindestens zwei Wasserstoff- und/oder Fluoratome auf. Über den vierten Rest sind die mindestens zwei olefinischen Gruppen miteinander verbunden. Mindestens zwei der olefinischen Gruppen unterscheiden sich, wobei die olefinischen Gruppen des Monomeren (A) in $\alpha$- und/oder $\beta$-Stellung zur olefinischen Gruppe in Art und/oder Anzahl unterschiedliche Atome in dem Rest aufweisen, der die mindestens zwei olefinischen Gruppen verbindet. Das Atom in $\alpha$-Stellung zur olefinischen Gruppe ist über eine kovalente Bindung mit einem Kohlenstoffatom der Doppelbindung verbunden. Die Atome in $\beta$-Stellung sind über zwei kovalente Bindungen mit einem Kohlenstoffatom der Doppelbindung verbunden.

Zu den bevorzugten olefinischen Gruppen gehören unter anderem die Allylgruppe, die Acryloyl- und die Methacryloylgruppe. Eine Allylgruppe weist beispielsweise in $\alpha$-Stellung zur Doppelbindung ein Kohlenstoffatom und in $\beta$-Stellung zwei Wasserstoffatome auf. Eine (Meth)acryloyl-Gruppe weist beispielsweise in $\alpha$-Stellung zur Doppelbindung ein Kohlenstoffatom und in $\beta$-Stellung zwei Sauerstoffatome auf.

Das Molekulargewicht der radikalisch polymerisierbaren Monomeren (A) beträgt mindestens 150 g/mol, vorzugsweise mindestens 250 g/mol und besonders bevorzugt mindestens 500 g/mol. Die am nächsten liegenden Kohlenstoffatome der mindestens zwei olefinischen Gruppen sind vorzugsweise über mindestens 5, insbesondere über mindestens 10 und besonders bevorzugt über mindestens 15 Bindungen voneinander getrennt.

Vorzugsweise ergeben sich durch die unterschiedlichen Substituenten an den jeweiligen Doppelbindungen unterschiedliche Polymerisationsgeschwindigkeiten. Die Polymerisationsgeschwindigkeit der unterschiedlich substituierten Doppelbindungen kann z.B. über deren Raum-Zeit-Ausbeute ermittelt werden. Näheres hierzu ist in Ullmann, 3. Auflage, Band 14, S. 131ff beschrieben.

Überraschend verbessert der Zusatz an Monomer (A) die mechanischen Eigenschaften des erfindungsgemäßen Kunststoffmaterials ohne dessen optischen Eigenschaften nachteilig zu beeinflussen. In vielen Fällen kann man einen günstigen Einfluss auf die optischen Eigenschaften feststellen.

Gemäß einem besonderen Aspekt der vorliegenden Erfindung sind die mit Monomer (A) bezeichneten Verbindungen vorzugsweise linear aufgebaute Moleküle unterschiedlicher Kettenlänge der allgemeinen Formel (X)

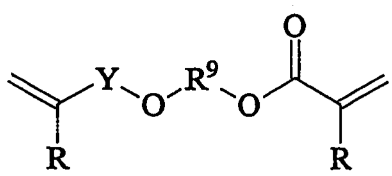

(X),

worin der Rest R unabhängig ein Wasserstoffatom, ein Fluoratom und/oder eine Methylgruppe, der Rest $R^9$ eine verbindende Gruppe, die vorzugsweise 1 bis 1000, insbesondere 2 bis 100 Kohlenstonatome umfasst, und der Rest Y eine Bindung oder eine verbindende Gruppe mit 0 bis 1000 Kohlenstoffatomen, insbesondere 1 bis 1000 Kohlenstoffatomen und vorzugsweise 1 bis 100 Kohlenstoffatomen bedeutet. Über den Molekülteil $R^9$ kann die Länge des Moleküls variiert werden. Verbindungen der Formel (X) weisen an einem Ende des Moleküls eine endständige (Meth)acrylatfunktion, am anderen eine endständige, von einer Methacrylatfunktion verschiedene Gruppe auf. Zu den bevorzugten Gruppen Y gehören insbesondere eine Bindung (Vinyl-Gruppe), eine $CH_2$-Gruppe (Allyl-Gruppe) sowie aliphatische oder aromatische Gruppen mit 1 bis 20 Kohlenstoffatomen, wie beispielsweise eine von Benzol abgeleitete Gruppe, wobei die aliphatischen oder aromatischen Gruppen besonders bevorzugt eine Urethangruppe aufweisen.

Der Rest $R^9$ ist vorzugsweise ein linearer oder verzweigter, aliphatischer oder cycloaliphatischer Rest, wie beispielsweise eine Methylen-, Ethylen-, Propylen-, iso-Propylen-, n-Butylen-, iso-Butylen-, t-Butylen- oder Cyclohexylen-Gruppe oder ein Rest der allgemeinen Formel

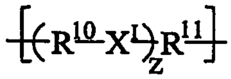

(Xa),

wobei der Rest $R^{11}$ für einen linearen oder verzweigten, aliphatischen oder cycloaliphatischen Rest oder einen substituierten oder unsubstituierten aromatischen oder heteroaromatischen Rest, wie beispielsweise eine Methylen- , Ethylen-, Propylen-, iso-Propylen-, n-Butylen-, iso-Butylen-, t-Butylen- oder Cyclohexylen-Gruppe, oder zweibindige aromatische oder heteroaromatsiche Gruppen steht, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste. Der Rest $R^{10}$ bezeichnet jeweils unabhängig voneinander einen linearen oder verzweigten, aliphatischen oder cycloaliphatischen Rest oder einen substituierten oder unsubstituierten aromatischen oder heteroaromatischen Rest, wie beispielsweise eine Methylen- , Ethylen-, Propylen-, iso-Propylen-, n-Butylen-, iso-Butylen-, t-Butylen- oder Cyclohexylen-Gruppe, oder zweibindige aromatische oder heteroaromatsiche Gruppen, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste ist. Der Rest $X^l$ ist jeweils unabhängig voneinander Sauerstoff, Schwefel, eine Estergruppe der allgemeinen Formel (Xb), (Xc),

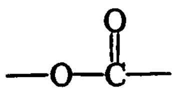

(Xb)

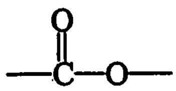

(Xc)

eine Urethangruppe der allgemeinen Formel (Xd), (Xe), (Xf) oder (Xg),

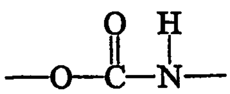

(Xd)

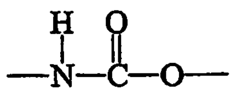

(Xe)

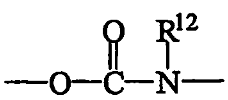

(Xf)

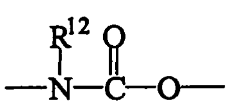

(Xg)

eine Thiourethangruppe der allgemeinen Formel (Xh), (Xi), (Xj) oder (Xk),

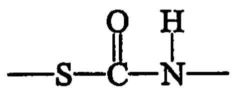

(Xh)

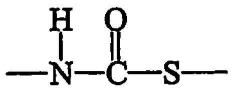

(Xi)

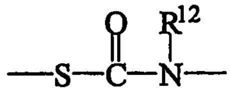

(Xj)

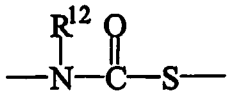

(Xk)

eine Dithiourethangruppe der allgemeinen Formel (Xl), (Xm), (Xn) oder (Xo)

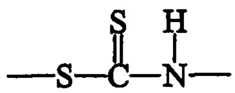

(Xl)

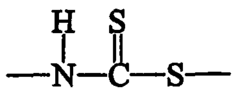

(Xm)

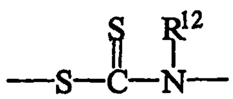

(Xn)

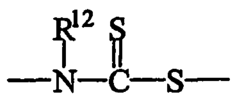

(Xo)

oder eine Thiocarbamatgruppe der allgemeinen Formel (Xp), (Xq), (Xr) oder (Xs)

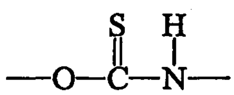

(Xp)

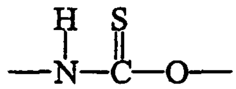

(Xq)

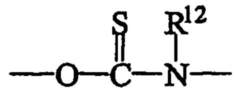

(Xr)

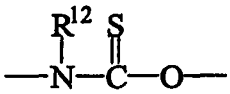

(Xs)

vorzugsweise Sauerstoff, wobei der Rest $R^{12}$ für einen linearen oder verzweigten, aliphatischen oder cycloaliphatischen Rest oder einen substituierten oder unsubstituierten aromatischen oder heteroaromatischen Rest, wie beispielsweise eine Methyl-, Ethyl-, Propyl-, iso-Propyl-, n-Butyl-, iso-Butyl-, t-Butyl- oder Cyclohexyl-Gruppe, oder einbindige aromatische oder heteroaromatsiche Gruppen steht, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste. z ist eine ganze Zahl zwischen 1 und 1000, zweckmäßigerweise zwischen 1 und 100, insbesondere zwischen 1 und 25.

In einer besonderen Ausführungform der Formel (X) handelt es sich um Verbindungen der Formel (XI)

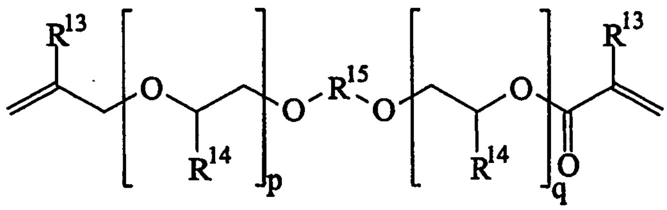

(XI)

und/oder der Formel (XII),

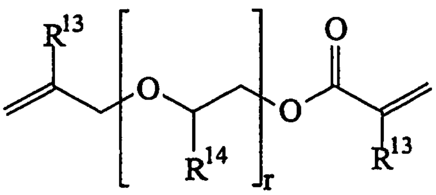

(XII)

worin die Reste $R^{13}$ und $R^{14}$ jeweils unabhängig voneinander für Wasserstoff oder einen Methylrest stehen, und der Rest $R^{15}$ einen linearen oder verzweigten, aliphatischen oder cycloaliphatischen zweibindigen Rest oder einen substituierten oder unsubstituierten aromatischen oder heteroaromatischen zweibindigen Rest bezeichnet. Bevorzugte Reste wurden zuvor dargelegt.

Die Länge der Kette kann durch Variation der Anzahl an Polyalkylenoxideinheiten, vorzugsweise Polyethylenglykoleinheiten, beeinflusst werden. Als besonders geeignet für die hier beschriebene Lösung der Aufgabe haben sich Verbindungen der Formel (XI) und (XII) erwiesen, die für r, p und q unabhängig voneinander 1 - 40, vorzugsweise 5 - 20, insbesondere 7 bis 15 und besonders bevorzugt 8 -12 Polyalkylenoxideinheiten aufweisen.

Erfindungsgemäß ganz besonders bevorzugte Monomere (A) umfassen Verbindungen der Formel (XI), insbesondere

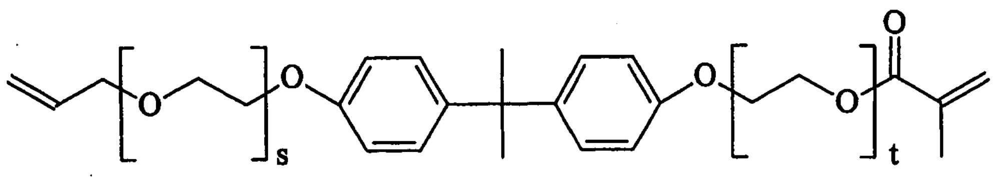

(XIIIa)

wobei s und t größer gleich null sind und die Summe s + t vorzugsweise im Bereich von 1 bis 20, insbesondere im Bereich von 2 bis 10 liegt, und Verbindungen der Formel (XII), insbesondere

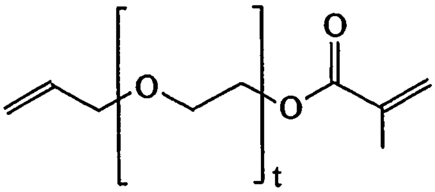

(XIIIb)

wobei s und t größer gleich null sind und die Summe s + t vorzugsweise im Bereich von 1 bis 20, insbesondere im Bereich von 2 bis 10 liegt.

Gemäß einem besonderen Aspekt enthält die Mischung vorzugsweise 1- 40 Gew.-%. insbesondere 5 bis 35 Gew.-% Verbindungen der Formel (XI) und/oder (XII), bezogen auf das Gesamtgewicht der Monomermischung.

Im Rahmen einer besonders bevorzugten Ausführungsform der vorliegenden Erfindung enthält die erfindungsgemäße Mischung zusätzlich mindestens ein ethylenisch ungesättigtes Monomer (B). Diese Monomere (B) unterscheiden sich von den asymmetrischen Monomeren (A) und den Thio(meth)acrylaten der Formeln (I) und/oder (II). Die Monomere (B) sind in der Fachwelt bekannt und vorzugsweise mit den Monomeren (A) und den Thio(meth)acrylaten der Formeln (I) und/oder (II) copolymerisierbar Zu diesen Monomeren (B) gehören insbesondere

Nitrile der (Meth)acrylsäure und andere stickstoffhaltige Methacrylate, wie Methacryloylamidoacetonitril, 2-Methacryloyloxyethylmethylcyanamid, Cyanomethylmethacrylat;

(Meth)acrylate, die sich von gesättigten Alkoholen ableiten, wie Methyl(meth)acrylat, Ethyl(meth)acrylat, n-Propyl (meth)acrylat, iso-Propyl(meth)acrylat, n-Butyl(meth)acrylat, sec-Butyl(meth)acrylat, tert-Butyl(meth)acrylat, Pentyl (meth)acrylat, Hexyl(meth)acrylat, Heptyl(meth)acrylat, 2-Ethylhexyl(meth)acrylat, Octyl(meth)acrylat, Nonyl(meth) acrylat, iso-Octyl(meth)acrylat, iso-Nonyl(meth)acrylat, 2-tert.-Butylheptyl(meth)acrylat, 3-iso-Propylheptyl(meth) acrylat, Decyl(meth)acrylat, Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl(meth)acrylat, Pentadecyl (meth)acrylat, Hexadecyl(meth)acrylat, 2-Methylhexadecyl(meth)acrylat, Heptadecyl(meth)acrylat, 5-iso-Propylheptadecyl(meth)acrylat, 4-tert.-Butyloctadecyl(meth)acrylat, 5-Ethyloctadecyl(meth)acrylat, 3-iso-Propyloctadecyl (meth)acrylat, Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat;

Cycloalkyl(meth)acrylate, wie Cyclopentyl(meth)acrylat, Cyclohexyl(meth)acrylat, 3-Vinyl-2-butyl-cyclohexyl(meth) acrylat und Bomyl(meth)acrylat;

(Meth)acrylate, die sich von ungesättigten Alkoholen ableiten, wie 2-Propinyl(meth)acrylat, Allyl(meth)acrylat und Oleyl(meth)acrylat, Vinyl(meth)acrylat;

Aryl(meth)acrylate, wie Benzyl(meth)acrylat oder Phenyl(meth)acrylat, wobei die Arylreste jeweils unsubstituiert oder bis zu vierfach substituiert sein können;

Hydroxylalkyl(meth)acrylate, wie 3-Hydroxypropyl(meth)acrylat, 3,4-Dihydroxybutyl(meth)acrylat, 2-Hydroxyethyl (meth)acrylat, 2-Hydroxypropyl(meth)acrylat, 2,5-Dimethyl-1,6-hexandiol(meth)acrylat, 1,10-Decandiol(meth)acrylat, 1,2-Propandiol(meth)acrylat;

Polyoxyethylen- und Polyoxypropylen-Derivate der (Meth)acrylsäure, wie Triethylenglykol(meth)acrylat, Tetraethylenglykol(meth)acrylat, Tetrapropylenglykol(meth)acrylat;

Di(meth)acrylate, wie 1,2-Ethandioldi(meth)acrylat, 1,4-Butandioldi(meth)acrylat, Diethylenglykoldi(meth)acrylat, Dipropylenglykoldi(meth)acrylat, Triethylenglykoldi(meth)acrylat, Tripropylenglykoldi(meth)acrylat, Tetraethylenglykoldi(meth)acrylat, Tetrapropylenglykoldi(meth)acrylat, Polyethylenglykoldi(meth)acrylat (vorzugsweise mit Gewichtsmittel der Molekulargewichte im Bereich von 200 - 5000000 g/mol, zweckmäßigerweise im Bereich von 200 bis 25000 g/mol, insbesondere im Bereich von 200 bis 1000 g/mol), Polypropylenglykoldi(meth)acrylat (vorzugsweise mit Gewichtsmittel der Molekulargewichte im Bereich von 200 - 5000000 g/mol, zweckmäßigerweise im Bereich von 250 bis 4000 g/mol, insbesondere im Bereich von 250 bis 1000 g/mol), 2,2'-Thiodiethanoldi(meth)acrylat (Thiodiglykoldi(meth)acrylat), 3,9-Di(meth)acryloyloxymethyltricyclo[5.2.1.0(2.6)]decan, insbesondere

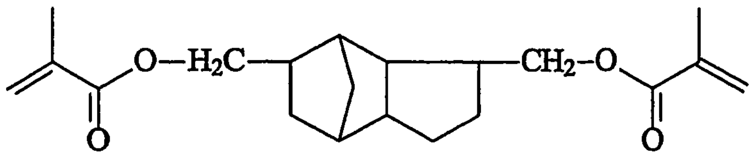

3,8-Di(meth)acryloyloxymethyltricyclo[5.2.1.0(2.6)]decan, 4,8-Di(meth)acryloyloxymethyltricyclo[5.2.1.0(2.6)]decan, 4,9-Di(meth)acryloyloxymethyltricyclo[5.2.1.0(2.6)]decan, ethoxyliertes Bisphenol A-Di(meth)acrylat, insbesondere

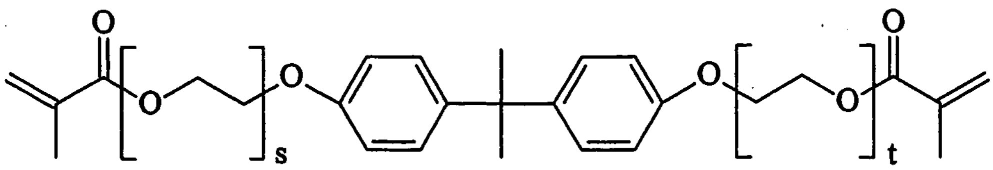

wobei s und t größer gleich null sind und die Summe s + t vorzugsweise im Bereich von 1 bis 20, insbesondere im Bereich von 2 bis 10 liegt, und durch Umsetzung von Diisocyanaten mit 2 Äquivalenten Hydroxyalkyl(meth)acrylat erhältliche Di(meth)acrylate, insbesondere

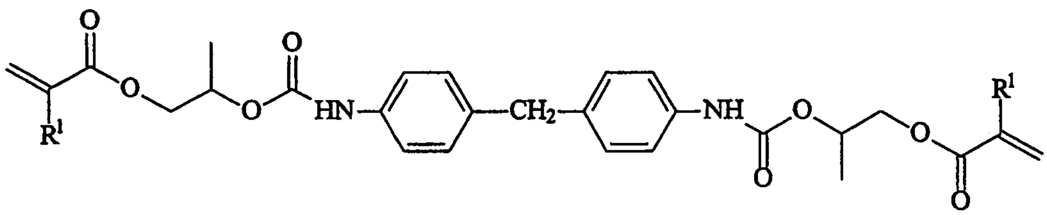

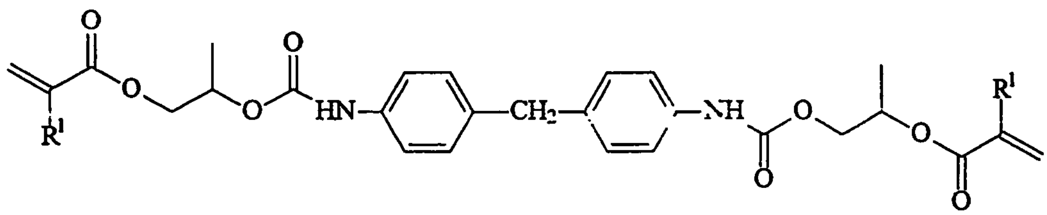

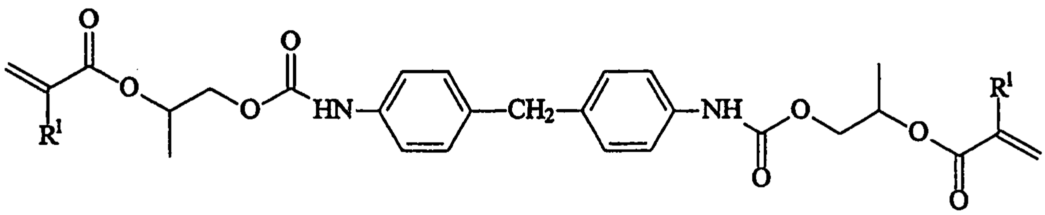

wobei der Rest $R^1$ jeweils unabhängig voneinander Wasserstoff oder einen Methylrest bedeutet,

Aminoalkyl(meth)acrylate, wie tris(2-Methacryloxyethyl)amin, N-Methylformamidoethyl(meth)acrylat, 2-Ureidoethyl (meth)acrylat;

carbonylhaltige (Meth)acrylate, wie 2-Carboxyethyl(meth)acrylat, Carboxymethyl(meth)acrylat, Oxazolidinylethyl (meth)acrylat, N-(Methacryloyloxy)formamid, Acetonyl(meth)acrylat, N-Methacryloylmorpholin, N-Methacryloyl-2-pyrrolidinon;

(Meth)acrylate von Etheralkoholen, wie Tetrahydrofurfuryl(meth)acrylat, Vinyloxyethoxyethyl(meth)acrylat, Methoxyethoxyethyl(meth)acrylat, 1-Butoxypropyl(meth)acrylat, 1-Methyl-(2-vinyloxy)ethyl(meth)acrylat, Cyclohexyloxymethyl(meth)acrylat, Methoxymethoxyethyl(meth)acrylat, Benzyloxymethyl(meth)acrylat, Furfuryl(meth)acrylat, 2-Butoxyethyl(meth)acrylat, 2-Ethoxyethoxymethyl(meth)acrylat, 2-Ethoxyethyl(meth)acrylat, Allyloxymethyl(meth) acrylat, 1-Ethoxybutyl(meth)acrylat, Methoxymethyl(meth)acrylat, 1-Ethoxyethyl(meth)acrylat, Ethoxymethyl(meth) acrylat;

(Meth)acrylate von halogenierten Alkoholen, wie 2,3-Dibromopropyl(meth)acrylat, 4-Bromophenyl(meth)acrylat, 1,3-Dichloro-2-propyl(meth)acrylat, 2-Bromoethyl(meth)acrylat, 2-Iodoethyl(meth)acrylat, Chloromethyl(meth)acrylat;

Oxiranyl(meth)acrylate, wie 2,3-Epoxybutyl(meth)acrylat, 3,4-Epoxybutyl(meth)acrylat, Glycidyl(meth)acrylat;

Amide der (Meth)acrylsäure, wie N-(3-Dimethylaminopropyl)(meth)acrylamid, N-(Diethylphosphono)(meth)acrylamid, 1-(Meth)acryloylamido-2-methyl-2-propanol, N-(3-Dibutylaminopropyl)(meth)acrylamid, N-t-Butyl-N-(diethylphosphono)(meth)acrylamid, N,N-bis(2-Diethylaminoethyl)(meth)acrylamid, 4-(Meth)acryloylamido-4-methyl-2-pentanol, N-(Methoxymethyl)(meth)acrylamid, N-(2-Hydroxyethyl)(meth)acrylamid, N-Acetyl(meth)acrylamid, N-(Dimethylaminoethyl)(meth)acrylamid, N-Methyl-N-phenyl(meth)acrylamid, N,N-Diethyl(meth)acrylamid, N-Methyl(meth)acrylamid, N,N-Dimethyl(meth)acrylamid, N-Isopropyl(meth)acrylamid;

heterocyclische (Meth)acrylate, wie 2-(1-Imidazolyl)ethyl(meth)acrylat, 2-(4-Morpholinyl)ethyl(meth)acrylat und 1-(2-Methacryloyloxyethyl)-2-pyrrolidon;

Phosphor-, Bor- und/oder Silicium-haltige (Meth)acrylate, wie 2-(Dimethylphosphato)propyl(meth)acrylat, 2-(Ethylenphosphito)propyl(meth)acrylat, Dimethylphosphinomethyl(meth)acrylat, Dimethylphosphonoethyl(meth)acrylat, Diethyl(meth)acryloylphosphonat, Dipropyl(meth)acryloylphosphat;

schwefelhaltige (Meth)acrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid;

Tri(meth)acrylate, wie Trimethyloylpropantri(meth)acrylat und Glycerintri(meth)acrylat;

Bis(allylcarbonate), wie Ethylenglykol-bis(allylcarbonat), 1,4-Butandiol-bis(allylcarbonat), Diethylenglykol-bis(allylcarbonat);

Vinylhalogenide, wie beispielsweise Vinylchlorid, Vinylfluorid, Vinylidenchlorid und Vinylidenfluorid;

Vinylester, wie Vinylacetat;

Aromatische Vinylverbindungen, wie Styrol, substituierte Styrole mit einem Alkylsubstituenten in der Seitenkette, wie z. B. α-Methylstyrol und α-Ethylstyrol, substituierte Styrole mit einem Alkylsubstituenten am Ring, wie Vinyltoluol und p-Methylstyrol, halogenierte Styrole, wie beispielsweise Monochlorstyrole, Dichlorstyrole, Tribromstyrole und Tetrabromstyrole;

Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;

Vinyl- und Isoprenylether;

Maleinsäure und Maleinsäurederivate, wie beispielsweise Mono- und Diester der Maleinsäure, wobei die Alkoholreste 1 bis 9 Kohlenstoffatome aufweisen,

Maleinsäureanhydrid, Methylmaleinsäureanhydrid, Maleinimid, Methylmaleinimid;

Fumarsäure und Fumarsäurederivate, wie beispielsweise Mono- und Diester der Fumarsäure, wobei die Alkoholreste 1 bis 9 Kohlenstoffatome aufweisen;

sowie Diene, wie beispielsweise 1,2-Divinylbenzol, 1,3-Divinylbenzol, 1,4-Divinylbenzol, 1,2-Diisopropenylbenzol, 1,3- Diisopropenylbenzol und 1,4-Düsopropenylbenzol.

In diesem Zusammenhang umfasst der Ausdruck (Meth)acrylate Methacrylate und Acrylate sowie Mischungen aus beiden. Dementsprechend umfasst der Ausdruck (Meth)acrylsäure Methacrylsäure und Acrylsäure sowie Mischungen aus beiden.

Die ethylenisch ungesättigten Monomere können einzeln oder als Mischungen eingesetzt werden.

Als Monomer (B) haben sich Di(meth)acrylate der Formel (XIV)

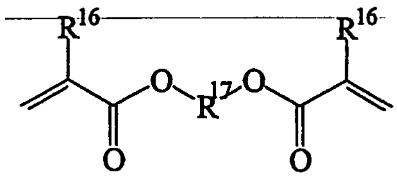

**(XIV),**

und Styrole besonders bewährt. Dabei bezeichnet $R^{16}$ jeweils unabhängig voneinander Wasserstoff oder Methyl. $R^{17}$ kennzeichnet einen linearen oder verzweigten Alkyl-, Cycloalkylrest oder einen aromatischen Rest mit vorzugsweise 1 bis 100, bevorzugt 1 bis 40, vorzugsweise 1 bis 20, zweckmäßigerweise 1 bis 8, insbesondere 1 bis 6, Kohlenstoffatomen, wie beispielsweise eine Methyl- Ethyl-, Propyl- iso-Propyl-, n-Butyl, iso-Butyl-, t-Butyl-, Cyclopentyl-, Cyclohexyl- oder Phenylgruppe. Dabei umfassen im Rahmen der vorliegenden Erfindung cycloaliphatische Reste auch bi-, tri- und polycyclische aliphatische Reste. Lineare oder verzweigte Alkyl- oder Cycloalkylreste mit 1 bis 6 Kohlenstoffatomen werden als $R^{17}$ ganz besonders bevorzugt.

Der Rest $R^{17}$ ist vorzugsweise ein linearer oder verzweigter, aliphatischer oder cycloaliphatischer Rest, wie beispielsweise eine Methylen-, Ethylen-, Propylen-, iso-Propylen-, n-Butylen-, iso-Butylen-, t-Butylen- oder Cyclohexylen-Gruppe oder ein Rest der allgemeinen Formel

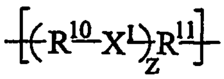

,

**(XIVa)**

wobei der Rest $R^{11}$ für einen linearen oder verzweigten, aliphatischen oder cycloaliphatischen Rest oder einen substituierten oder unsubstituierten aromatischen oder heteroaromatischen Rest, wie beispielsweise eine Methylen- , Ethylen-,

Propylen-, iso-Propylen-, n-Butylen-, iso-Butylen-, t-Butylen- oder Cyclohexylen-Gruppe, oder zweibindige aromatische oder heteroaromatsiche Gruppen steht, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste. Der Rest $R^{10}$ bezeichnet jeweils unabhängig voneinander einen linearen oder verzweigten, aliphatischen oder cycloaliphatischen Rest oder einen substituierten oder unsubstituierten aromatischen oder heteroaromatischen Rest, wie beispielsweise eine Methylen- , Ethylen-, Propylen-, iso-Propylen-, n-Butylen-, iso-Butylen-, t-Butylen- oder Cyclohexylen-Gruppe, oder zweibindige aromatische oder heteroaromatsiche Gruppen, die sich von Benzol, Naphthalin, Biphenyl, Diphenylether, Diphenylmethan. Diohenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste ist. Der Rest $X^I$ ist jeweils unabhängig voneinander Sauerstoff, Schwefel, eine Estergruppe der allgemeinen Formel (XIVb), (XIVc),

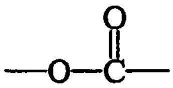

(XIVb)

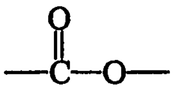

(XIVc)

eine Urethangruppe der allgemeinen Formel (XIVd), (XIVe), (XIVF) oder (XIVg),

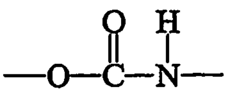

(XIVd)

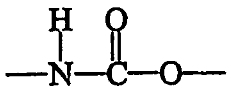

(XIVe)

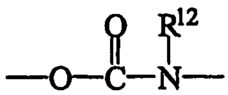

(XIVf)

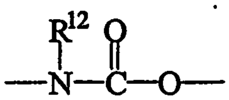

(XIVg)

eine Thiourethangruppe der allgemeinen Formel (XIVh), (XIVi), (XIVj) oder (XIVk),

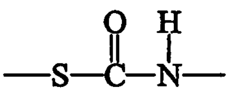

(XIVh)

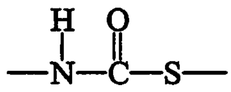

(XIVi)

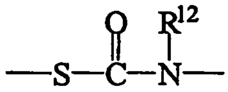

(XIVj)

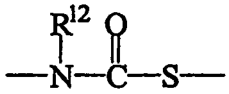

(XIVk)

eine Dithiourethangruppe der allgemeinen Formel (XIVl), (XIVm), (XIVn) oder (XIVo)

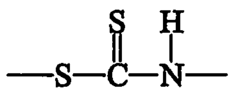

(XIVl)

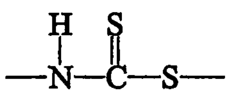

(XIVm)

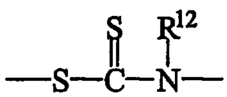

(XIVn)

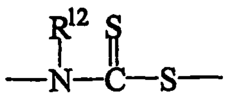

(XIVo)

oder eine Thiocarbamatgruppe der allgemeinen Formel (XIVp), (XIVq), (XIVr) oder (XIVs)

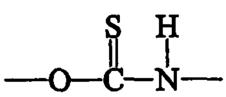

(XIVp)

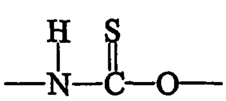

(XIVq)

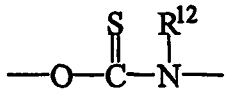

(XIVr)

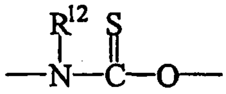

(XIVs)

vorzugsweise Sauerstoff, wobei der Rest $R^{12}$ für einen linearen oder verzweigten, aliphatischen oder cycloaliphatischen Rest oder einen substituierten oder unsubstituierten aromatischen oder heteroaromatischen Rest, wie beispielsweise eine Methyl-, Ethyl-, Propyl-, iso-Propyl-, n-Butyl-, iso-Butyl-, t-Butyl- oder Cyclohexyl-Gruppe, oder einbindige aromatische oder heteroaromatsiche Gruppen steht, die sich von Benzol, Naphthalin, Biphenyl, Diphenylether, Diphenylmethan, Diphenyldimethylmethan, Bisphenon, Diphenylsulfon, Chinolin, Pyridin, Anthracen und Phenanthren ableiten. Dabei umfassen im Rahmen der vorliegenden Erfindung cycloaliphatische Reste auch bi-, tri- und polycyclische aliphatische Reste. z ist eine ganze Zahl zwischen 1 und 1000, zweckmäßigerweise zwischen 1 und 100, insbesondere zwischen 1 und 25.

Besonders bevorzugte Di(meth)acrylate der Formel (XIV) umfassen Ethylenglykoldi(meth)acrylat, ethoxyliertes Bisphenol A-Di(meth)acrylat, insbesondere

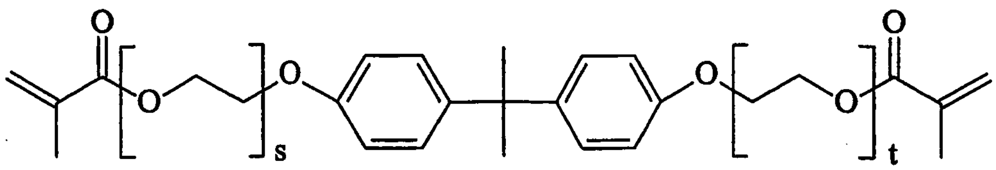

wobei s und t größer gleich null sind und die Summe s + t vorzugsweise im Bereich von 1 bis 20, insbesondere im Bereich von 2 bis 10 liegt, und durch Umsetzung von Diisocyanaten mit 2 Äquivalenten Hydroxyalkyl(meth)acrylat erhältliche Di(meth)acrylate, insbesondere

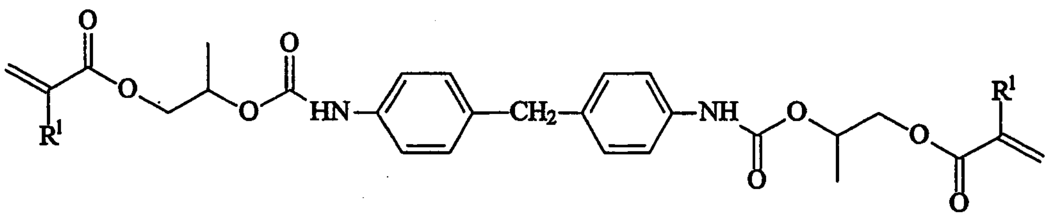

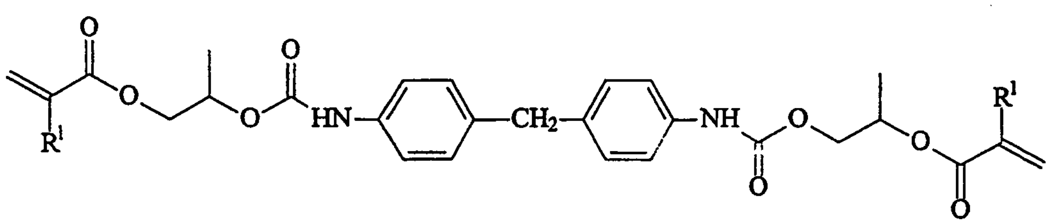

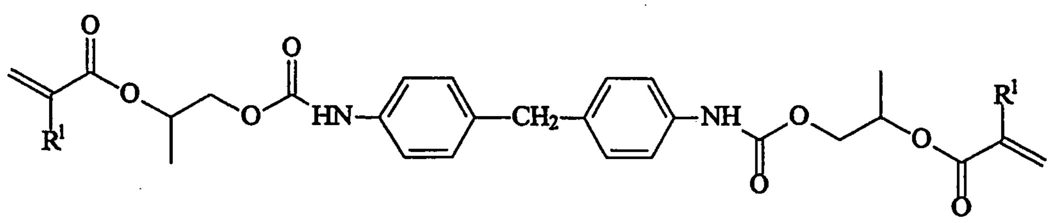

wobei der Rest $R^1$ jeweils unabhängig voneinander Wasserstoff oder einen Methylrest bedeutet,
3,8-Di(meth)acryloyloxymethyltricyclo[5.2.1.0(2.6)]decan,
3,9-Di(meth)acryloyloxymethyltricyclo[5.2.1.0(2.6)]decan,
4,8-Di(meth)acryloyloxymethyltricyclo[5.2.1.0(2.6)]decan,
4,9-Di(meth)acryloyloxymethyltricyclo[5.2.1.0(2.6)]decan,
Thiodiglykoldi(meth)acrylat, Polypropylenglykoldi(meth)acrylat, vorzugsweise mit einem Gewichtsmittel des Molekulargewichts im Bereich von 200 bis 1000 g/mol, und/oder Polyethylenglykoldi(meth)acrylat, vorzugsweise mit einem Gewichtsmittel des Molekulargewichts im Bereich von 200 bis 1000 g/mol. Dabei werden die Dimethacrylate der genannten Verbindungen besonders bevorzugt. Ganz besonders vorteilhafte Ergebnisse werden unter Verwendung von Polyethylenglykoldimethacrylat, vorzugsweise mit einem Gewichtsmittel des Molekulargewichts im Bereich von 200 bis 1000 g/mol, erzielt.

In besonders bevorzugten Ausführungsformen der erfindungsgemäßen Mischungen sind mindestens 70,0 Gewichtsprozent der ethylenisch ungesättigten Monomere (B), besonders bevorzugt mehr als 80,0 Gew.-%, zweckmäßigerweise 90,0 Gew.-%, insbesondere 95,0 Gew.-%, der ethylenisch ungesättigten Monomere, bezogen auf das Gesamtgewicht der ethylenisch ungesättigten Monomere (B), Di(meth)acrylate der Formel (XIV) und/oder Styrol.

Die Zusammensetzung der erfindungsgemäßen Monomermischungen ist prinzipiell beliebig. Sie kann dazu genutzt werden, das Eigenschaftsprofil des erfindungsgemäßen Kunststoffes an die Bedürfnisse der Anwendung anzupassen. Beispielsweise kann es äußerst zweckmäßig sein, dass die Monomermischung einen deutlichen Überschuß an Verbindungen der Formel (I) und (II) oder an Monomer (A) enthält. Eine Mischung enthaltend 99,5 Mol.-% Verbindungen der Formel (I) und (II) bzw. Monomer (A) und 0,5 Mol.-% Monomer (A) bzw. Verbindungen der Formel (I) und (II), jeweils bezogen auf die Summe der Molzahl von den Verbindungen der Formel (I) und (II) sowie Monomer (A) in der Mischung, wäre ein Beispiel für eine derartige Mischung. Möglich sind auch nahezu äquimolare Mischungen der Verbindungen der Formel (1) und (11) sowie des Monomers (A).

Es hat sich jedoch als überaus zweckmäßig erwiesen, die Zusammensetzung der Monomermischung so zu wählen, dass sich die Verbindung(en) der Formel (I) und (II) und das mindestens eine Monomer (A) bei der gewünschten Polymerisationstemperatur homogen mischen, weil derartige Mischungen aufgrund ihrer i. a. niedrigen Viskosität leicht handhabbar sind und darüber hinaus zu homogenen Kunststoffen mit verbesserten Materialeigenschaften polymerisiert werden können.

Gemäß einer besonders bevorzugten Ausführungsform der vorliegenden Erfindung enthält die Monomermischung mindestens 5,0 Gew.-%, vorzugsweise mindestens 20,0 Gew.-%, besonders bevorzugt mindestens 50,0 Gew.-%, zweckmäßigerweise mindestens 60,0 Gew.-%, insbesondere mindestens 80,0 Gew.-%, Verbindungen der Formel (I) und (II), jeweils bezogen auf das Gesamtgewicht der Monomermischung. Der Gewichtsanteil von Monomer (A) beträgt vorzugsweise mindestens 2,0 Gew.-%, vorzugsweise mindestens 20,0 Gew.-%, besonders bevorzugt mindestens 40,0 Gew.-%, zweckmäßigerweise mindestens 50,0 Gew.-%, insbesondere mindestens 80,0 Gew.-%, jeweils bezogen auf das Gesamtgewicht der Monomermischung.

Gemäß einem besonderen Aspekt der vorliegenden Erfindung weist die Mischung

50 bis 90 Gew.-%, insbesondere 60 bis 85 Gew.-% Monomere der Formeln (I) und/oder (II),
2 bis 50 Gew.-%, insbesondere 10 bis 30 Gew.-% Monomere (A) und
0 bis 45 Gew.-%, insbesondere 10 bis 30 Gew.-% Monomere (B) auf, jeweils bezogen auf das Gesamtgewicht der Monomermischung.

Die Herstellung der erfindungsgemäß einzusetzenden Monomermischung ist dem Fachmann offensichtlich. Sie kann beispielsweise durch Mischen der Monomere (A) sowie der Thio(meth)acrylate der Formeln (I) und/oder (II) auf an sich bekannte Weise erfolgen.

Für die Zwecke der vorliegenden Erfindung ist die Monomermischung bei Normaldruck und Temperaturen im Bereich von 20,0°C bis 80,0°C vorzugsweise fließfähig. Der Begriff "fließfähig" ist dem Fachmann bekannt. Er kennzeichnet eine Flüssigkeit, die vorzugsweise in verschiedene Formen gegossen und unter Verwendung geeigneter Hilfsmittel gerührt und homogenisiert werden kann. Besondere, fließfähige Massen im Sinne der Erfindung weisen insbesondere bei 25°C und bei Normaldruck (101325 Pa) dynamische Viskositäten in der Größenordnung von 0,1 mPa.s bis 10 Pa.s, zweckmäßigerweise im Bereich von 0,65 mPa.s bis 1 Pa.s, auf. In einer ganz besonders bevorzugten Ausführungsform der vorliegenden Erfindung weist eine gegossene Monomermischung keine Blasen, insbesondere keine Luftblasen auf. Ebenfalls bevorzugt sind solche Monomermischungen, aus denen Blasen, insbesondere Luftblasen, durch geeignete Verfahren, wie beispielsweise Temperaturerhöhung undloder Anlegen von Vakuum entfernt werden können.

Der erfindungsgemäße hochtransparente Kunststoff ist durch freie radikalische Copolymerisation der vorstehend beschriebenen niedrigviskosen ($\eta$< 200 mPa.s) Monomermischung erhältlich. Die freie radikalische Copolymerisation ist ein weithin bekanntes durch freie Radikale initiiertes Verfahren, bei welchem man eine Mischung niedermolekularer Monomere in hochmolekulare Verbindungen, sogenannte Polymere, überführt. Für weitere Einzelheiten wird auf die Offenbarung von H. G. Elias, Makromoleküle, Band 1 und 2, Basel, Heidelberg, New York Hüthig und Wepf. 1990 und Ullmann's Encyclopedia of Industrial Chemistry, 5. Aufl., Stichwort "Polymerization Processes" verwiesen.

In einer bevorzugten Ausführungsform der vorliegenden Erfindung ist der erfindungsgemäße Kunststoff durch Masse- oder Substanzpolymerisation der Monomermischung erhältlich. Dabei wird unter der Masse- oder Substanzpolymerisation ein Polymerisationsverfahren verstanden, bei dem Monomere ohne Lösungsmittel polymerisiert werden, so dass die Polymerisationsreaktion in Masse oder in Substanz vonstatten geht. Im Gegensatz dazu ist die Polymerisation in Emulsion (sogenannte Emulsionspolymerisation) und die Polymerisation in der Dispersion (sogenannte Suspensionspolymerisation) zu sehen, bei der die organischen Monomere mit Schutzkolloiden und/oder Stabilisatoren in wässriger Phase suspendiert werden und mehr oder weniger grobe Polymerisatteilchen gebildet werden. Eine besondere Form der Polymerisation in heterogener Phase ist die Perlpolymerisation, die im wesentlichen zur Suspensionspolymerisation zu rechnen ist.

Die Polymerisationsreaktion kann grundsätzlich auf jede dem Fachmann geläufige Weise ausgelöst werden, beispielsweise unter Verwendung eines Radikalinitiators (z. B. Peroxid, Azoverbindung) oder durch Bestrahlen mit UV-Strahlen, sichtbarem Licht, $\alpha$- Strahlen, $\beta$-Strahlen oder $\gamma$-Strahlen, oder eine Kombination derselben eingeleitet werden.

In einer bevorzugten Ausführungsform der vorliegenden Erfindung werden zur Initiierung der Polymerisation lipophile radikalische Polymerisationsinitiatoren verwendet. Die radikalischen Polymerisationsinitiatoren sind insbesondere deswegen lipophil, damit sie sich in der Mischung der Substanzpolymerisation lösen. Zu einsetzbaren Verbindungen gehören neben den klassischen Azoinitiatoren, wie Azoisobuttersäurenitril (AIBN) bzw. 1,1-Azobiscyclohexancarbonitril, u. a. aliphatische Peroxyverbindungen, wie z. B. tert.-Amylperoxyneodecanoat, tert.-Amylperoxypivalat, tert.-Butylperoxypivalat, tert.-Amylperoxy-2-ethylhexanoat, tert.-Butylperoxy-2-ethylhexanoat, tert.-Amylperoxy-3,5,5,-trimethylhexanoat, Ethyl-3,3-di-(tert.-amylperoxy)-butyrate, tert.-Butylperbenzoat, tert.-Butylhydroperoxid, Decanoylperoxid, Laurylperoxid, Benzoylperoxid und beliebige Mischungen der genannten Verbindungen. Von den vorgenannten Verbindungen ist AIBN ganz besonders bevorzugt.

In einer weiteren bevorzugten Ausführungsform der vorliegenden Erfindung erfolgt die Einleitung der Polymerisation unter Verwendung bekannter Photoinitiatoren durch Bestrahlen mit UV-Strahlen oder dergleichen. Hier können die gängigen, kommerziell erhältlichen Verbindungen wie z. B. Benzophenon, $\alpha$,$\alpha$-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Methyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid, Bisacylphosphinoxid und andere zum Einsatz kommen, wobei die genannten Photoinitiatoren allein oder in Kombination von zwei oder mehreren oder in Kombination mit einem der obigen Polymerisationsinitiatoren benutzt werden können.

Die Menge der Radikalbildner kann in weiten Bereichen variieren. Bevorzugt kommen beispielsweise Mengen im Bereich von 0,1 bis 5,0 Gew.-%, bezogen auf das Gewicht der Gesamtzusammensetzung zum Einsatz. Besonders bevorzugt werden Mengen im Bereich von 0,1 bis 2,0 Gew.-%, insbesondere Mengen im Bereich von 0,1 bis 0,5 Gew.-%, jeweils bezogen auf das Gewicht der Gesamtzusammensetzung, verwendet.

Die für die Polymerisation zu wählende Polymerisationstemperatur ist dem Fachmann offensichtlich. Sie wird in erster Linie durch den gewählten Initiator und die Art und Weise der initiierung (thermisch, durch Bestrahlung u. a.) bestimmt. Es ist bekannt, dass die Polymerisationstemperatur die Produkteigenschaften eines Polymeren beeinflussen kann. Daher werden im Rahmen der vorliegenden Erfindung Polymerisationstemperaturen im Bereich von 20,0°C bis 100,0°C, zweckmäßigerweise im Bereich von 20,0°C bis 80,0°C, insbesondere im Bereich von 20,0°C bis 60,0°C bevorzugt. In einer besonders bevorzugten Ausführungsform der vorliegenden Erfindung wird die Reaktionstemperatur während der Reaktion, vorzugsweise stufenweise erhöht.

Weiterhin hat sich auch ein Tempern bei erhöhter Temperatur, beispielsweise bei 100°C bis 150°C, gegen Ende der Reaktion als zweckmäßig erwiesen.

Die Reaktion kann sowohl bei Unterdruck als auch bei Überdruck stattfinden. Vorzugsweise wird sie aber bei Normaldruck durchgeführt. Die Reaktion kann unter Luft als auch unter Schutzgasatmosphäre stattfinden, wobei vorzugsweise ein möglichst geringer Sauerstoffanteil vorhanden ist, da dieser eine mögliche Polymerisation inhibiert.

In einer besonders bevorzugten Ausführungsform der vorliegenden Erfindung geht man zur Herstellung des erfindungsgemäßen hochtransparenten Kunststoffs so vor, dass man eine homogene Mischung aus den Komponenten Monomermischung, Initiator und weiteren Additiven, wie z. B. Gleitmittel herstellt und diese daraufhin zwischen Glasplatten füllt, deren Form durch die spätere Anwendung, z. B. als Linsen, Brillengläser, Prismen oder sonstige, optische Komponenten, vorbestimmt ist. Die initiierung der Substanzpolymerisation erfolgt durch Energiezufuhr, beispielsweise durch energiereiche Strahlung, insbesondere mit UV-Licht, oder durch Erwärmen, zweckmäßigerweise im Wasserbad und über mehrere Stunden. Man erhält auf diese Weise das optische Material in seiner gewünschten Form als klaren, transparenten, farblosen, harten Kunststoff.

Im Rahmen der vorliegenden Erfindung bezeichnen Gleitmittel Zusatzstoffe für gefüllte plastische Massen, wie Pressmassen und Spritzgussmassen, um die Füllstoffe leichter gleitend und die Pressmassen damit leichter verformbar zu machen. Hierzu sind beispielsweise Metallseifen und Siloxan-Kombinationen geeignet. Infolge seiner Unlöslichkeit in Kunststoffen wandert ein Teil des Gleitmittels bei der Verarbeitung an die Oberfläche und wirkt als Trennmittel. Besonders geeignete Gleitmittel, wie nicht-ionische fluoroberflächenaktive Mittel, nicht-ionische siliconoberflächenaktive Mittel, quatemäre Alkylammoniumsalze und saure Phosphatester, werden in der EP 271839 A beschrieben, auf deren Offenbarung im Rahmen der vorliegenden Erfindung explizit Bezug genommen wird.

Erfindungsgemäß wird ein hochtransparenter Kunststoff mit sehr guten optischen und mechanischen Eigenschaften zur Verfügung gestellt. So besitzt er gemäß DIN 5036 vorzugsweise eine Transmission größer 88,5 %, zweckmäßig größer 89,0 %, vorzugsweise größer 89,5 %, insbesondere größer 90,0 %.

Brechungsindex $n_D$ des erfindungdsgemäßen Kunststoffes ist vorzugsweise größer oder gleich 1,57, insbesondere größer 1,58 und besonders bevorzugt größer oder gleich 1,6. Der Brechungsindex eines Mediums ist im Allgemeinen von der Wellenlänge der einfallenden Strahlung und von der Temperatur abhängig. Die erfindungsgemäßen Angaben des Brechungsindex beziehen sich daher auf die in DIN 53491 spezifizierten Standardangaben (Standardwellenlänge der (gelben) D-Linie des Natriums (ca. 589 nm)).

Erfindungsgemäß weist der Kunststoff vorzugsweise eine Abbesche Zahl > 35,0 insbesondere > 36,0, gemäß DIN 53491 auf. Die Abbesche-Zahl bezeichnet eine von E. Abbe eingeführte Größe $\nu_D$

$$\nu_D = \frac{(n_D - 1)}{(n_F - n_C)}$$

zur Kennzeichnung der Dispersion eines optischen Mediums, wobei $n_D$, $n_F$ und $n_c$ die Brechzahlen des Mediums bei den Fraunhoferschen D-, F- und C-Linien sind. Dabei ist D der Mittelwert der Natrium-D-Linien $\lambda_1$ = 589,6 nm und $\lambda_2$ = 589,0 nm, F die Wasserstoff-Linie mit $\lambda$ = 486,1 nm und C die Wasserstoff-Linie mit $\lambda$ = 656,3 nm. Eine große Abbesche-Zahl bedeutet eine geringe Dispersion. Weitere Informationen zur Abbeschen-Zahl kann der Fachmann der Literatur, beispielsweise dem Lexikon der Physik (Walter Greulich (Hrsg.); Lexikon der Physik; Heidelberg; Spektrum, Akademischer Verlag; Band 1; 1998) entnehmen.

Gemäß einer besonders bevorzugten Ausführungsform der vorliegenden Erfindung weist der Kunststoff eine Abbesche Zahl > 36,0, zweckmäßigerweise > 37,0, insbesondere > 39,0 auf. Dabei haben sich Kunststoffe mit einer Abbeschen Zahl > 40,0, vorzugsweise > 42,0 als ganz besonders vorteilhaft erwiesen. Erfindungsgemäß von höchstem Interesse sind Kunststoffe mit einer Abbeschen Zahl > 43,0, insbesondere > 44,0.

Die Schlagzähigkeit nach Charpy des erfindungsgemäßen Kunststoffes, gemessen nach ISO 179/1fU, ist vorzugsweise größer oder gleich 4,0, insbesondere größer oder gleich 6,0 kJ/$m^2$ und besonders bevorzugt größer oder gleich 8,0 kJ/$m^2$.

Weiterhin zeichnet sich der erfindungsgemäße Kunststoff günstigerweise durch eine hohe Vicat-Temperatur gemessen nach ISO 306 aus, so dass er auch bei Temperaturen oberhalb Raumtemperatur seine hervorragenden mechanischen Eigenschaften, insbesondere seine Schlagzähigkeit nach Charpy und seine Härte behält. Vorzugsweise ist die Vicat-Temperatur des erfindungsgemäßen Kunststoffes gemessen nach ISO 306 größer 50°C, zweckmäßigerweise größer 60°C, insbesondere größer 70°C. Dabei haben sich Vicat-Temperaturen des erfindungsgemäßen Kunststoffes gemessen nach ISO 306 größer 80°C, vorzugsweise größer 90°C, zweckmäßigerweise größer 100°C, insbesondere größer 120°C als ganz besonders vorteilhaft erwiesen. Im Rahmen einer ganz besonders bevorzugten Ausführungsform der vorliegenden Erfindung weist der Kunststoff eine Vicat-Temperatur gemessen nach ISO 306 größer 140°C, vorzugsweise größer 160°C, insbesondere größer 180°C, auf.

Das Maximum des Tangens Delta des erfindungsgemäßen Kunststoffes, welches im Rahmen der vorliegenden Erfindung mittels Torsionsschwingungsmessung gemäß ISO 6721-7 gemessen wird, ist vorzugsweise größer oder gleich 50, zweckmäßigerweise größer oder gleich 70.

Mögliche Einsatzgebiete für den erfindungsgemäßen hochtransparenten Kunststoff sind dem Fachmann offensichtlich. Er eignet sich insbesondere für alle Anwendungen, die für transparente Kunststoffe vorgezeichnet sind.

Aufgrund seiner charakteristischen Eigenschaften ist er vor allem für optische Linsen, insbesondere für ophthalmische Linsen geeignet.

Die nachfolgenden Beispiele und das Vergleichsbeispiel dienen zur Erläuterung der Erfindung, ohne dass hierdurch eine Beschränkung erfolgen soll.

Synthese der Thiomethacrylat-Mischung

75,36 g 1,2-Ethandithiol werden in einen Erlenmeyerkolben mit Schutzgas-Einleitung eingewogen und gerührt und 416,43 g 13%ige NaOH-Lösung werden innerhalb von 30 Minuten bei 25-30°C unter Wasserkühlung zudosiert. Es bildet sich eine bräunliche, klare Lösung.

178,64 g Methacrylsäureanhydrid und die Na-Thiolat-Lösung werden nun parallel bei der gewünschten Dosiertemperatur innerhalb von 45 Minuten zu dem vorgelegten und gerührten Essigester/Wasser im Reaktionskolben dosiert. Dabei wird gegebenenfalls Schutzgas über den Ansatz geleitet. Im allgemeinen kühlt der Kolbeninhalt bei Zulaufbeginn um ca. 2°C ab, nach ca. 5-10 Minuten beginnt eine leicht exotherme Reaktion, d. h. nun kühlt man entsprechend, um die gewünschte Reaktionstemperatur (35°C) einzuhalten. Nach Zulaufende rührt man den Ansatz noch 5 Minuten bei 35°C und kühlt ihn dann unter Rühren auf ca. 25°C ab.

Der Ansatz wird in einen Scheidetrichter überführt, aufgetrennt und die untere, wässrige Phase abgelassen. Zur Aufarbeitung wird die organische Phase in einen Erlenmeyerkolben überführt und mit ®Dowex M-31 ca. 15 Minuten gerührt, anschließend filtriert man den Ionentauscher ab.

Die etwas trübe bis fast klare Rohesterlösung wird nun mit 100 ppm HQME stabilisiert und am Rotationsverdampfer bei max. 50°C eingeengt. Das farblose Endprodukt wird gegebenenfalls bei Raumtemperatur (20-25°C) mit 0,5% Kieselgur versetzt und ca. 10 Minuten gerührt. Anschließend filtriert man über eine Seitz Filterschicht K800 und eine 0,45 μm Filtermembran bei ca. 1 bar. Man erhält ca. 140 g farblos, klaren Ester.

Synthese von Allylpolyethylenglykolmethacrylat

4415,4 g (8,87 mol) Allylpolyethylenglykol (BASF, Clariant), 6213,8 g (62,06 mol) Methylmethacrylat und 2510 mg (500 ppm) Hydrochinonmonomethylether wurden vorgelegt und unter Rühren und Lufteinleitung erhitzt. Zur Entwässerung wurden ca. 700 g Destillat abgezogen. Danach wurde die dem Destillat entsprechende Menge Methylmethacrylat und der Katalysator (Isopropyltitanat, 1,5% auf Alkohol, 66,2 g) zugegeben und die Alkoholyse durchgeführt. Der Destillatabzug wurde über die Kolonnenmitteltemperatur gesteuert. Als die Kolonnenmitteltemperatur von 80 °C nicht mehr gehalten werden konnte, wurde die Temperatur schrittweise auf 99 °C erhöht. Die Alkoholyse wurde beendet, als die Kopftemperatur bei 99°C konstant blieb (Reaktionszeit (ohne Entwässerung): 2,5 h).

Nach kurzem Abkühlen wurde der Katalysator mit Schwefelsäure gefällt und mit Natriumcarbonat neutralisiert. Anschließend wurde über einen Seitz K1000 Druckfilter filtriert. Der Rohester wurde am Rotationsverdampfer entgast.

Beispiel 1 bis 3 und Vergleichsbeispiele 1 bis 5 Es wurden verschiedene Mischungen hergestellt, deren Zusammensetzung aus Tabelle 1 ersichtlich ist. Neben der zuvor dargelegten Thiomethacrylat-Mischung und einem wie zuvor beschriebene erhaltenen Allylpolyethylenglykolmethacrylat mit einem Ethoxylierungsgrad von ca. 10 wurde Polyethylenglykoldimethacrylat mit einem Ethoxylierungsgrad von ca. 10 kommerziell erhältlich von Röhm GmbH & Co. KG eingesetzt. Das Stryol wurde von BASF kommerziell bezogen. Die Mischungen wurden anschließend nun in eine Form gegossen und unter Verwendung von 0,3 Gew.-% Irgacur 819 und 0,2 Gew.-% t-Butylperoctoat in einer UV-Härtungsanlage mit 1200 W Quecksilberhochdruckstrahler polymerisiert. Anschließend wurde der Formkörper 2 Stunden im Trockenschrank bei 120°C gelagert.

Tabelle 1

| | Thiomethacrylat -Mischung [Gew.-%] | Styrol [Gew.-%] | Allylpolyethylenglykolmethacrylat [Gew.-%] | Polyethylenglykoldimethacrylat [Gew.-%] |
|---|---|---|---|---|
| Beispiel 1 | 60 | 20 | 20 | - |
| Vergleichsbeispiel 1 | 60 | 20 | - | 20 |
| Beispiel 2 | 60 | 25 | 15 | - |
| Vergleichsbeispiel 2 | 60 | 25 | - | 15 |
| Beispiel 3 | 80 | - | 20 | - |
| Vergleichsbeispiel 3 | 80 | - | - | 20 |
| Vergleichsbeispiel 4 | 80 | 20 | - | - |
| Vergleichsbeispiel 5 | 100 | - | - | - |

Die mechanischen und optischen Eigenschaften der erhaltenen Kunststoffkörper wurden gemessen, wobei die erhaltenen Daten in Tabelle 2 dargelegt sind.

Tabelle 2

| | Schlagzähigkeit n. Charpy gemäß DIN ISO 179/1fU [KJ/m$^2$] | Brechungsindex bei 589 nm gemäß DIN 53491 |
|---|---|---|
| Beispiel 1 | 9,6 | 1,588 |
| Vergleichsbeispiel 1 | 7,7 | 1,588 |
| Beispiel 2 | 8,6 | 1,590 |
| Vergleichsbeispiel 2 | 7,2 | 1,593 |
| Beispiel 3 | 4,2 | 1,592 |
| Vergleichsbeispiel 3 | 3,2 | 1,594 |
| Vergleichsbeispiel 4 | 3,2 | 1,613 |
| Vergleichsbeispiel 5 | 3,3 | 1,617 |

Es zeigt sich, dass die erfindungsgemäßen Mischungen zu sehr schlagzähen Kunststoffen polymerisiert werden können. Im Vergleich hierzu ist die Schlagzähigkeit von bekannten Kunststoffkörpern relativ gering, wobei die Verbesserung auf die Verwendung von asymmetrischen Monomeren zurückzuführen ist.

## Patentansprüche

**1.** Mischung zur Herstellung transparenter Kunststoffe, umfassend

a) Verbindungen der Formel (I) und (II)

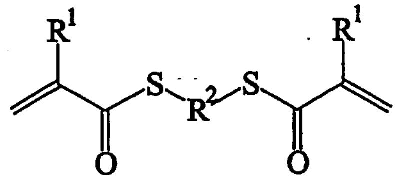

(I)

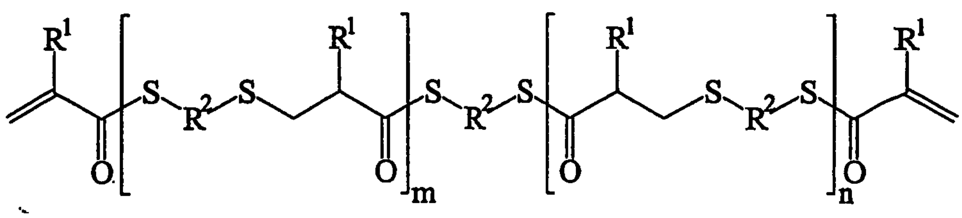

(II)

worin R$^1$ jeweils unabhängig voneinander Wasserstoff oder einen Methylrest,
R$^2$ jeweils unabhängig voneinander einen linearen oder verzweigten, aliphatischen oder cycloaliphatischen Rest oder einen substituierten
oder unsubstituierten aromatischen oder heteroaromatischen Rest und m und n jeweils unabhängig voneinander eine ganze Zahl größer gleich 0 mit m + n > 0 bedeuten, und

b) mindestens ein radikalisch polymerisierbares Monomer (A) mit einem Molekulargewicht von mindestens 150 g/mol, das mindestens zwei endständige olefinische Gruppen enthält,

**dadurch gekennzeichnet, dass** mindestens zwei der olefinischen Gruppen des Monomeren (A) in α- und/oder β-Stellung zur olefinischen Gruppe in Art und/oder Anzahl unterschiedliche Atome in dem Rest aufweisen, der die mindestens zwei olefinischen Gruppen verbindet.

2. Mischung gemäß Anspruch 1, **dadurch gekennzeichnet, dass** das Monomer (A) mindestens eine Allyl-Gruppe und mindestens eine (Meth)acryloyl-Gruppe umfasst.

3. Mischung gemäß Anspruch 1 oder 2, **dadurch gekennzeichnet, dass** sie mehr als 10 mol-%, bezogen auf die Gesamtmenge der Verbindungen der Formel (I) und (II), Verbindungen der Formel (II) mit m+n = 2 enthält.

4. Mischung gemäß einem der vorhergehenden Ansprüche, **dadurch gekennzeichnet, dass** der Rest $R^2$ der Formeln (I) und/oder (II) ein aliphatischer Rest mit 1 bis 10 Kohlenstoffatomen ist.

5. Mischung gemäß einem der vorhergehenden Ansprüche, **dadurch gekennzeichnet, dass** die Mischung mehr als 5,8 mol-%, bezogen auf die Gesamtmenge der Verbindungen der Formel (I) und (II), Verbindungen der Formel (II) mit m+n = 3 enthält.

6. Mischung gemäß einem der vorhergehenden Ansprüche, **dadurch gekennzeichnet, dass** die Mischung 0,1 bis 50 mol-%, bezogen auf die Gesamtmenge der Verbindungen der Formel (I) und (II), Verbindungen der Formel (I) enthält.

7. Mischung gemäß einem der vorhergehenden Ansprüche, **dadurch gekennzeichnet, dass** die Mischung mehr als 30 mol-%, bezogen auf die Gesamtmenge der Verbindungen der Formel (I) und (II), Verbindungen der Formel (II) mit m+n = 1 enthält.

8. Mischung gemäß einem der vorangehenden Ansprüche, **dadurch gekennzeichnet, dass** die Mischung Verbindungen der Formel (II) mit m+n > 3 enthält.

9. Mischung gemäß einem der vorhergehenden Ansprüche, **dadurch gekennzeichnet, dass** der Gesamtanteil an Verbindungen der Formel (I) und (II) mindestens 5,0 Gew.-%, bezogen auf das Gesamtgewicht der Mischung, beträgt.

10. Mischung gemäß einem der vorhergehenden Ansprüche, **dadurch gekennzeichnet, dass** die am nächsten liegenden Kohlenstoffatome der mindestens zwei olefinischen Gruppen vorzugsweise über mindestens 5 Bindungen voneinander getrennt sind.

11. Mischung gemäß einem der vorhergehenden Ansprüche, **dadurch gekennzeichnet, dass** die Mischung als Monomer (A) mindestens eine Verbindung der Formel (X)

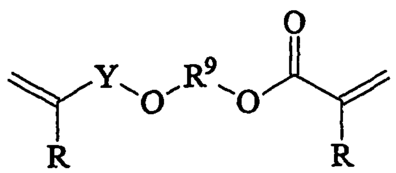

(X),

worin der Rest R unabhängig ein Wasserstoffatom, ein Fluoratom und/oder eine Methylgruppe, der Rest $R^9$ eine verbindende Gruppe und der Rest Y eine Bindung oder eine verbindende Gruppe mit 1 bis 1000 Kohlenstoffatomen bedeutet, enthält.

12. Mischung gemäß einem der vorhergehenden Ansprüche, **dadurch gekennzeichnet, dass** die Mischung als Monomer (A) mindestens eine Verbindung der Formel (XI),

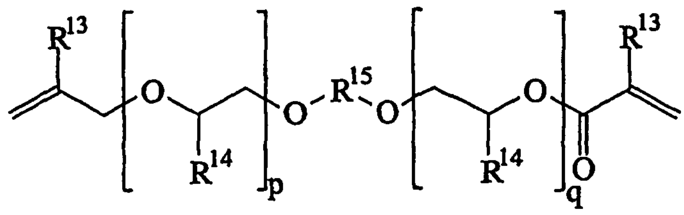

(XI)

worin $R^{13}$ jeweils unabhängig voneinander Wasserstoff oder einen Methylrest,
$R^{14}$ jeweils unabhängig voneinander Wasserstoff oder einen Methylrest,
$R^{15}$ einen linearen oder verzweigten, aliphatischen oder cycloaliphatischen Rest oder einen substituierten oder unsubstituierten aromatischen oder heteroaromatischen Rest und
p und q jeweils unabhängig voneinander eine ganze Zahl größer gleich 0 mit $p+q > 0$ bedeuten, und/oder der Formel (XII),

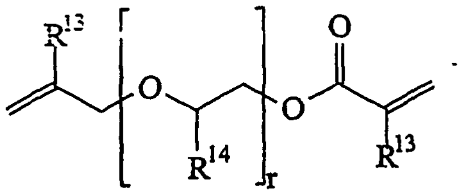

(XII)

worin $R^{13}$ jeweils unabhängig voneinander Wasserstoff oder einen Methylrest,
$R^{14}$ Wasserstoff und einen Methylrest und
r eine ganze Zahl größer 0 bedeuten, enthält.

13. Mischung gemäß Anspruch 12, **dadurch gekennzeichnet, dass** die Mischung 1- 40 Gew.-% der Verbindungen der Formel (XI) und/oder (XII), bezogen auf das Gesamtgewicht der Monomermischung, enthält.

14. Mischung gemäß einem der Ansprüche 12 oder 13, **dadurch gekennzeichnet, dass** die Zahl r in Formel (XII) im Bereich von 7 bis 15 liegt.

15. Mischung gemäß einem der vorhergehenden Ansprüche, **dadurch gekennzeichnet dass** die Mischung mindestens ein Monomer (B) enthält, das mit den Monomeren der Formeln (I) und (II) sowie dem Monomeren (A) copolymerisierbar ist.

16. Mischung gemäß Anspruch 15, **dadurch gekennzeichnet, dass** die Mischung aromatische Vinylverbindungen und/oder (Meth)acrylate umfasst.

17. Mischung gemäß Anspruch 16, **dadurch gekennzeichnet, dass** die Mischung Di(meth)acrylate umfasst.

18. Verfahren zur Herstellung transparenter Kunststoffe, **dadurch gekennzeichnet, dass** man eine Mischung gemäß einem der vorhergehenden Ansprüche 1 bis 17 polymerisiert.

19. Transparenter Kunststoff erhältlich durch ein Verfahren gemäß Anspruch 18.

20. Kunststoff gemäß Anspruch 19, **dadurch gekennzeichnet, dass** der Brechungsindex des Kunststoffs gemäß DIN 53491 größer als 1,58 ist.

21. Kunststoff gemäß einem der Ansprüchen 19 oder 20, **dadurch gekennzeichnet**, die Abbesche Zahl des Kunststoffs gemäß DIN 53491 größer als 36 ist.

22. Kunststoff gemäß einem der Ansprüche 19 bis 21, **dadurch gekennzeichnet, dass** die Schlagzähigkeit des Kunststoffs nach ISO 179/1fU von größer als 6 $KJ/m^2$ ist.

**23.** Kunststoff gemäß einem der Ansprüche 19 bis 22, **dadurch gekennzeichnet, dass** die Transmission des Kunststoffs gemäß DIN 5036 größer als 89,0 % ist.

**24.** Kunststoff gemäß einem der Ansprüche 19 bis 23, **dadurch gekennzeichnet, dass** seine Vicat-Temperatur gemessen gemäß ISO 306 größer als 50,0 °C ist.

**25.** Verwendung des hochtransparenten Kunststoffs gemäß einem der Ansprüchen 19 bis 24 als optische Linse.

**26.** Optische, insbesondere ophthalmische Linse aufweisend einen transparenten Kunststoff gemäß mindestens einem der Ansprüche 19 bis 24.

**Claims**

**1.** Mixture for preparing transparent plastics, encompassing

a) compounds of the formula (I) and (II)

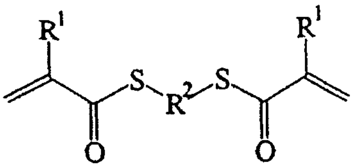

(I)

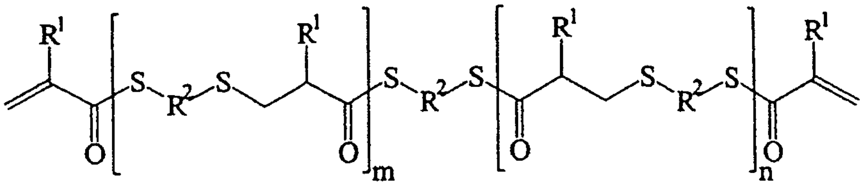

(II)

where each $R^1$, independently of the others, is hydrogen or a methyl radical,
each $R^2$, independently of the others, is a linear or branched, aliphatic or cycloaliphatic radical, or a substituted or unsubstituted aromatic or heteroaromatic radical, and each of m and n, independently of the others, is a whole number greater than or equal to 0, where m + n > 0, and

b) at least one monomer (A) capable of free-radical polymerization with a molar mass of at least 150 g/mol, which contains at least two terminal olefinic groups,

**characterized in that** at least two of the olefinic groups of the monomer (A) have, in the α- and/or β-position with respect to the olefinic group, atoms which differ in nature and/or number, in the radical which connects the at least two olefinic groups.

**2.** Mixture according to Claim 1, **characterized in that** the monomer (A) encompasses at least one allyl group and at least one (meth)acryloyl group.

**3.** Mixture according to Claim 1 or 2, **characterized in that** it comprises more than 10 mol%, based on the total amount of the compounds of the formula (I) and (II), of compounds of the formula (II) where m + n = 2.

**4.** Mixture according to any of the preceding claims, **characterized in that** the radical $R^2$ of the formulae (I) and/or (II) is an aliphatic radical having from 1 to 10 carbon atoms.

**5.** Mixture according to any of the preceding claims, **characterized in that** the mixture comprises more than 5.8 mol%, based on the total amount of the compounds of the formula (I) and (II), of compounds of the formula (II) where m + n = 3.

6. Mixture according to any of the preceding claims, **characterized in that** the mixture comprises from 0.1 to 50 mol%, based on the total amount of the compounds of the formula (I) and (II), of compounds of the formula (I).

7. Mixture according to any of the preceding claims, **characterized in that** the mixture comprises more than 30 mol%, based on the total amount of the compounds of the formula (I) and (II), of compounds of the formula (II) where m + n = 1.

8. Mixture according to any of the preceding claims, **characterized in that** the mixture comprises compounds of the formula (II) where m + n > 3.

9. Mixture according to any of the preceding claims, **characterized in that** the total content of compounds of the formula (I) and (II) is at least 5.0% by weight, based on the total weight of the mixture.

10. Mixture according to any of the preceding claims, **characterized in that** there are at least 5 bonds separating the most adjacent carbon atoms of the at least two olefinic groups from one another.

11. Mixture according to any of the preceding claims, **characterized in that** the mixture comprises, as monomer (A), at least one compound of the formula (X)

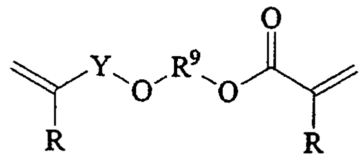

(X),

where the radical R is independently a hydrogen atom, a fluorine atom and/or a methyl group, the radical $R^9$ is a connecting group and the radical Y is a bond or a connecting group having from 1 to 1000 carbon atoms.

12. Mixture according to any of the preceding claims, **characterized in that** the mixture comprises, as monomer (A), at least one compound of the formula (XI)

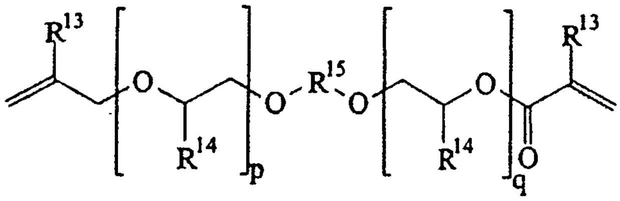

(XI)

where each $R^{13}$, independently of the other, is hydrogen or a methyl radical,
each $R^{14}$, independently of the other, is hydrogen or a methyl radical,
$R^{15}$ is a linear or branched, aliphatic or cycloaliphatic radical or a substituted or unsubstituted aromatic or heteroaromatic radical, and
each of p and q, independently of the other, is a whole number greater than or equal to 0, where p + q > 0, and/or of the formula (XII)

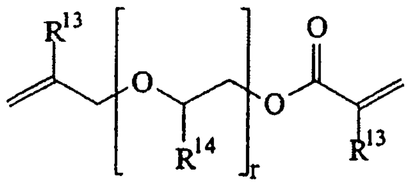

(XII)

where each $R^{13}$, independently of the other, is hydrogen or a methyl radical,

$R^{14}$ is hydrogen or a methyl radical, and
r is a whole number greater than 0.

13. Mixture according to Claim 12, **characterized in that** the mixture comprises from 1 to 40% by weight of the compounds of the formula (XI) and/or (XII), based on the total weight of the monomer mixture.

14. Mixture according to Claim 12 or 13, **characterized in that** the number r in formula (XII) is in the range from 7 to 15.

15. Mixture according to any of the preceding claims, **characterized in that** the mixture comprises at least one monomer (B) which is copolymerizable with the monomers of the formulae (I) and (II), and also with the monomer (A).

16. Mixture according to Claim 15, **characterized in that** the mixture encompasses aromatic vinyl compounds and/or (meth)acrylates.

17. Mixture according to Claim 16, **characterized in that** the mixture encompasses di(meth)acrylates.

18. Process for preparing transparent plastics, **characterized in that** a mixture according to any of the preceding Claims 1 to 17 is polymerized.

19. Transparent plastic obtainable via a process according to Claim 18.

20. Plastic according to Claim 19, **characterized in that** the refractive index of the plastic to DIN 53491 is greater than 1.58.

21. Plastic according to Claim 19 or 20, **characterized in that** the Abbe number of the plastic to DIN 53491 is greater than 36.

22. Plastic according to any of Claims 19 to 21, **characterized in that** the impact strength of the plastic to ISO 179/1fU is greater than 6 kJ/$m^2$.

23. Plastic according to any of Claims 19 to 22, **characterized in that** the transmittance of the plastic to DIN 5036 is greater than 89.0%.

24. Plastic according to any of Claims 19 to 23, **characterized in that** its Vicat point measured to ISO 306 is greater than 50.0°C.

25. Use of the high-transparency plastic according to any of Claims 19 to 24 as an optical lens.

26. Optical, in particular ophthalmic, lens comprising a transparent plastic according to at least one of Claims 19 to 24.

**Revendications**

1. Mélange pour la production de plastiques transparents, comprenant :

   a) des composés des formules (I) et (II)

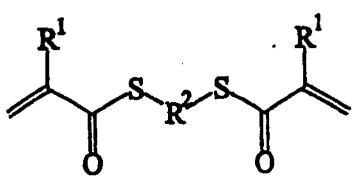

(I)

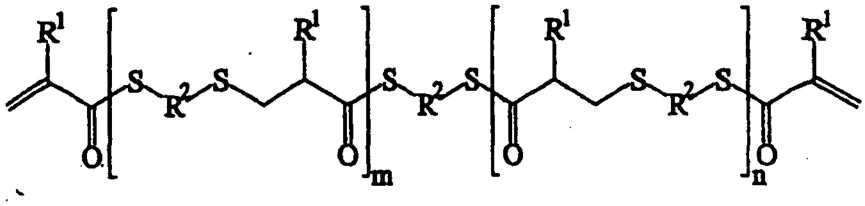 (II)

dans lesquelles les $R^1$ représentent à chaque fois indépendamment les uns des autres de l'hydrogène ou un radical méthyle,
les $R^2$ représentent à chaque fois indépendamment les uns des autres un radical aliphatique ou cycloaliphatique linéaire ou ramifié ou un radical aromatique ou hétéroaromatique substitué ou non substitué, et m et n représentent à chaque fois indépendamment l'un de l'autre un nombre entier supérieur ou égal à 0 avec $m + n > 0$, et

b) au moins un monomère (A) polymérisable par voie radicalaire, d'un poids moléculaire d'au moins 150 g/mole, contenant au moins deux groupes oléfiniques en position terminale,

**caractérisé en ce qu'**au moins deux des groupes oléfiniques du monomère (A) présentent, en position $\alpha$ et/ou $\beta$ par rapport au groupe oléfinique, des atomes différant en type et/ou en nombre dans le radical, qui lie les au moins deux groupes oléfiniques.

2. Mélange selon la revendication 1, **caractérisé en ce que** le monomère (A) comprend au moins un groupe allyle et au moins un groupe (méth)acryloyle.

3. Mélange selon la revendication 1 ou 2, **caractérisé en ce qu'**il contient plus de 10% molaires, par rapport à la quantité totale des composés des formules (I) et (II), de composés de la formule (II) dans laquelle $m + n = 2$.

4. Mélange selon l'une quelconque des revendications qui précèdent, **caractérisé en ce que** le radical $R^2$ des formules (I) et/ou (II) est un radical aliphatique comportant de 1 à 10 atomes de carbone.

5. Mélange selon l'une quelconque des revendications qui précèdent, **caractérisé en ce que** le mélange contient plus de 5,8% molaires, par rapport à la quantité totale des composés des formules (I) et (II), de composés de la formule (II) dans laquelle $m + n = 3$.

6. Mélange selon l'une quelconque des revendications qui précèdent, **caractérisé en ce que** le mélange contient de 0,1 à 50% molaires, par rapport à la quantité totale des composés des formules (I) et (II), de composés de la formule (I).

7. Mélange selon l'une quelconque des revendications qui précèdent, **caractérisé en ce que** le mélange contient plus de 30% molaires, par rapport à la quantité totale des composés des formules (I) et (II), de composés de la formule (II) dans laquelle $m + n = 1$.

8. Mélange selon l'une quelconque des revendications qui précèdent, **caractérisé en ce que** le mélange contient des composés de la formule (II) dans laquelle $m + n > 3$.

9. Mélange selon l'une quelconque des revendications qui précèdent, **caractérisé en ce que** la fraction totale de composés des formules (I) et (II) est d'au moins 5,0% en poids, par rapport au poids total du mélange.

10. Mélange selon l'une quelconque des revendications qui précèdent, **caractérisé en ce que** les atomes de carbone les plus voisins des au moins deux groupes oléfiniques sont séparés les uns des autres via au moins 5 liaisons.

11. Mélange selon l'une quelconque des revendications qui précèdent, **caractérisé en ce que** le mélange contient en tant que monomère (A) au moins un composé de la formule (X)

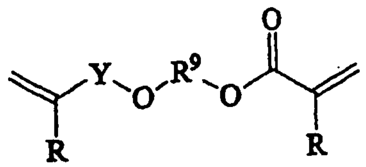

(X),

dans laquelle les radicaux R représentent indépendamment les uns des autres un atome d'hydrogène, un atome de fluor et/ou un radical méthyle, le radical $R^9$ un groupe de liaison et le radical Y une liaison ou un groupe de liaison comportant de 1 à 1000 atomes de carbone.

12. Mélange selon l'une quelconque des revendications qui précèdent, **caractérisé en ce que** le mélange contient en tant que monomère (A) au moins un composé de la formule (XI)

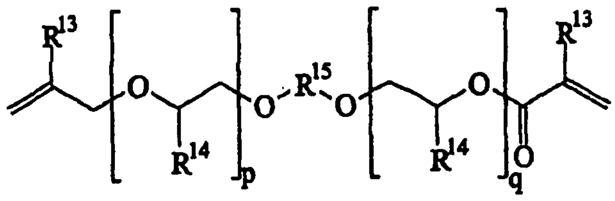

(XI)

dans laquelle les $R^{13}$ représentent à chaque fois indépendamment les uns des autres un atome d'hydrogène ou un radical méthyle,
les $R^{14}$ représentent à chaque fois indépendamment les uns des autres de l'hydrogène ou un radical méthyle,
les $R^{15}$ représentent un radical aliphatique ou cycloaliphatique linéaire ou ramifié ou un radical aromatique ou hétéroaromatique substitué ou non substitué et p et q représentent à chaque fois indépendamment l'un de l'autre un nombre entier supérieur ou égal à 0 avec p + q > 0, et/ou de la formule (XII),

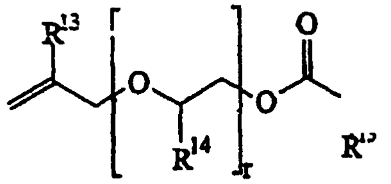

(XII)

dans laquelle les $R^{13}$ représentent à chaque fois indépendamment les uns des autres de l'hydrogène ou un radical méthyle,
$R^{14}$ représente de l'hydrogène et un radical méthyle et
r est un nombre entier supérieur à 0.

13. Mélange selon la revendication 12, **caractérisé en ce que** le mélange contient de 1 à 40% en poids des composés des formules (XI) et/ou (XII), par rapport au poids total du mélange de monomères.

14. Mélange selon l'une quelconque des revendications 12 ou 13, **caractérisé en ce que** le nombre r dans la formule (XII) est de l'ordre de 7 à 15.

15. Mélange selon l'une quelconque des revendications qui précèdent, **caractérisé en ce que** le mélange contient au moins un monomère (B), qui est copolymérisable avec les monomères des formules (I) et (II) ainsi qu'avec le monomère (A).

16. Mélange selon la revendication 15, **caractérisé en ce que** le mélange comprend des composés vinyliques aromatiques et/ou des (méth)acrylates.

17. Mélange selon la revendication 16, **caractérisé en ce que** le mélange comprend des di(méth)acrylates.

**18.** Procédé de production de plastiques transparents, **caractérisé en ce que** l'on polymérise un mélange selon l'une quelconque des revendications 1 à 17 qui précèdent.

**19.** Plastique transparent que l'on peut obtenir par un procédé selon la revendication 18.

**20.** Plastique selon la revendication 19, **caractérisé en ce que** l'indice de réfraction du plastique selon DIN 53491 est supérieur à 1,58.

**21.** Plastique selon l'une quelconque des revendications 19 ou 20, **caractérisé en ce que** le coefficient d'Abbe du plastique selon DIN 53491 est supérieur à 36.

**22.** Plastique selon l'une quelconque des revendications 19 à 21, **caractérisé en ce que** la résistance au choc du plastique selon ISO 179/1fU est supérieure à 6 $kJ/m^2$.

**23.** Plastique selon l'une quelconque des revendications 19 à 22, **caractérisé en ce que** la transmission du plastique selon DIN 5036 est supérieure à 89,0%.

**24.** Plastique selon l'une quelconque des revendications 19 à 23, **caractérisé en ce que** sa température de ramollissement Vicat, mesurée selon ISO 306, est supérieure à 50°C.

**25.** Utilisation du plastique à haute transparence selon l'une quelconque des revendications 19 à 24 en tant que lentilles optiques.

**26.** Lentilles optiques, en particulier lentilles ophtalmiques, présentant un plastique transparent selon au moins l'une quelconque des revendications 19 à 24.